# EUROPEAN PATENT APPLICATION

(11) **EP 4 589 176 A1**
(43) Date of publication of application: **23.07.2025**
(21) Application number: 23940926.1
(22) Date of filing: 30.11.2023
(51) Int. Cl.: F16H 57/04, F16H 57/02

(54) **DUAL-WAY OIL-COOLED AND LUBRICATED POWERTRAIN AND ELECTRIC VEHICLE**

(71) Applicant: Huawei Digital Power Technologies Co., Ltd., Futian District, Shenzhen, Guangdong 518043 (CN)
(72) Inventor: CHEN, Fei, Shenzhen, Guangdong 518043 (CN); HUANGFU, Yuzhao, Shenzhen, Guangdong 518043 (CN); ZHU, Lingkun, Shenzhen, Guangdong 518043 (CN); TIAN, Ye, Shenzhen, Guangdong 518043 (CN)
(74) Representative: Gill Jennings & Every LLP
(86) International application number: PCT/CN2023/135667
(87) International publication number: WO 2025/111991

(57) **Abstract**

This application provides a powertrain with dual-line oil cooling and lubrication and an electric vehicle. The powertrain includes a housing, an oil pump, a motor, a reducer, and two oil lines. The housing includes a motor receptacle and a reducer receptacle. The motor receptacle is configured to accommodate a stator and a rotor of the motor, the reducer receptacle is configured to accommodate a gear set of the reducer, and the two oil lines are configured to convey oil to the motor receptacle and the reducer receptacle respectively. One oil line is configured to connect to at least one of an outlet of the oil pump, a fine filter, and a heat exchanger, and the motor receptacle, the fine filter is configured to filter impurities of oil flowing through the one oil line, and the heat exchanger is configured to cool the oil flowing through the one oil line. The other oil line is configured to directly connect to another outlet of the oil pump and the reducer receptacle. In this application, cold oil with high cleanliness is obtained by using the one oil line, to cool and lubricate the motor having a fine structure, and coarse hot oil in the other oil line directly lubricates the gear set of the reducer. The two oil lines effectively improve cooling and lubrication efficiency of the oil lines.

## Description

### TECHNICAL FIELD

This application relates to the field of electric vehicle technologies, and in particular, to a powertrain with dual-line oil cooling and lubrication and an electric vehicle.

### BACKGROUND

Existing electric vehicles usually use an integrated powertrain as a power source. To cool and lubricate the powertrain, it is usually necessary to arrange an oil line in the powertrain to cool a stator and a rotor and lubricate an entire rotating shaft system. An oil pump is arranged in the powertrain. The oil pump drives lubricating oil with oil pressure to cool and lubricate a motor and a reducer separately. In a current powertrain structure design, it is not considered that the motor and the reducer have different temperature and quality requirements on lubricating oil for cooling and lubrication, and the lubricating oil driven by the oil pump is conveyed to the motor and the reducer without difference. As a result, work load of the oil pump and a heat exchanger is heavy.

### SUMMARY

This application provides a powertrain with dual-line oil cooling and lubrication and an electric vehicle.

According to a first aspect, an embodiment of this application provides a powertrain with dual-line oil cooling and lubrication. The powertrain includes a housing, an oil pump, a motor, a reducer, and two oil lines. The housing includes a motor receptacle and a reducer receptacle. The motor receptacle is configured to accommodate a stator and a rotor of the motor, the reducer receptacle is configured to accommodate a gear set of the reducer, and the two oil lines are configured to convey oil to the motor receptacle and the reducer receptacle respectively. One oil line is configured to connect to at least one of an outlet of the oil pump, a fine filter, and a heat exchanger, and the motor receptacle, the fine filter is configured to filter impurities of oil flowing through the one oil line, and the heat exchanger is configured to cool the oil flowing through the one oil line. The other oil line is configured to directly connect to another outlet of the oil pump and the reducer receptacle.

In this embodiment of this application, the oil pump is configured to: provide oil pressure for the oil, and drive the oil to be conveyed into the reducer receptacle or the motor receptacle to cool and lubricate the motor or the reducer.

In this embodiment of this application, the one oil line is configured to sequentially connect to at least one of the outlet of the oil pump, the fine filter, the heat exchanger, and the motor receptacle, and the oil conveyed by the one oil line sequentially passes through at least one of the fine filter and the heat exchanger, and the motor receptacle, and reaches the stator and the rotor of the motor. The fine filter is configured to filter the oil, to obtain high-quality oil with high cleanliness, and prevent excessive impurities from entering an air gap between the stator and the rotor and affecting operation of the motor. The heat exchanger is configured to perform heat exchange on the received oil, and the cooled oil is configured to cool and lubricate the rotor, the stator, a bearing, or the like of the motor, to facilitate temperature rise control on the powertrain.

In this embodiment of this application, the other oil line is configured to directly input the oil pumped out by the oil pump into the reducer receptacle to lubricate the gear set of the reducer. The oil sequentially passes through the oil pump and the reducer receptacle and reaches the reducer. The oil in the other oil line is not cooled by the heat exchanger, and maintains a high temperature. The hot oil has a low viscosity, and the hot oil entering the reducer may reduce rotation resistance of the gear set of the reducer, reduce an oil churning loss, and reduce a power loss. Alternatively, the oil in the other oil line is not filtered by the fine filter. A gear clearance of the reducer has a lower requirement on impurities in the oil than the air gap between the stator and the rotor of the motor, so that even the oil that does not pass through the fine filter has little impact on the gear set of the reducer, and work load of the fine filter and oil pump can be reduced.

In an embodiment, the oil conveyed by the one oil line flows through the fine filter and the heat exchanger sequentially and then enters the motor receptacle. In this embodiment of this application, the oil conveyed by the one oil line is filtered by the fine filter and heat-exchanged by the heat exchanger sequentially, so that the oil entering the motor receptacle has high cleanliness, few impurities, and a low temperature. In this way, a degree of rotation blocking between the rotor and stator of the motor is lower, motor cooling effect is better, working efficiency of the motor is improved, stability of the motor is ensured, and overall efficiency and stability of the powertrain are improved.

In an embodiment, the powertrain includes one oil pump, and the one oil pump is configured to drive the oil in the one oil line to pass through at least one of the fine filter and the heat exchanger from an outlet of the one oil pump and then enter the motor receptacle, where the fine filter is configured to filter the impurities of the oil, and the heat exchanger is configured to cool the oil. The one oil pump is configured to drive the oil in the other oil line to directly enter the reducer receptacle from another outlet of the one oil pump without passing through at least one of the fine filter and the heat exchanger.

In this embodiment of this application, the one oil pump drives oil in the two oil lines to flow. This reduces a quantity of components of the powertrain and a size of the powertrain, and reduces difficulty in assembling the components of the powertrain. In this embodiment of this application, the outlet of the one oil pump conveys the oil in the one oil line to sequentially pass through the fine filter, the heat exchanger, and the motor receptacle. This helps ensure that the oil entering the motor receptacle is oil with high cleanliness, improve reliability of the motor during operation, and improve overall performance of a vehicle. The another outlet of the one oil pump conveys the oil in the other oil line to directly enter the reducer receptacle. This helps shorten a path for the oil to reach the reducer receptacle and more quickly provide the oil for lubricating the gear set of the reducer. The oil in the other oil line does not pass through the fine filter and the heat exchanger. This further helps reduce work load of the fine filter and the heat exchanger, and improve cooling and lubrication efficiency. The hot oil having the low viscosity can reduce the rotation resistance of the gear set of the reducer. This helps reduce the power loss.

In an embodiment, the housing includes an intermediate housing, a motor end cover, and a reducer end cover, the intermediate housing includes a motor accommodating groove, a reducer accommodating groove, and an oil pump accommodating groove, groove openings of the motor accommodating groove and the reducer accommodating groove are away from each other along an axial direction of the powertrain, the motor accommodating groove and the motor end cover form the motor receptacle through enclosing, the reducer accommodating groove and the reducer end cover form the reducer receptacle through enclosing, and the oil pump accommodating groove is configured to accommodate the oil pump. The oil pump accommodating groove and the motor accommodating groove are arranged along a radial direction of the powertrain. The oil pump accommodating groove includes a groove opening, and the groove opening of the oil pump accommodating groove is away from the reducer accommodating groove along the axial direction of the powertrain.

In this embodiment of this application, the motor accommodating groove is configured to accommodate the motor, the reducer accommodating groove is configured to accommodate the reducer, the motor end cover is configured to cover the motor accommodating groove to form the motor receptacle, the motor receptacle is configured to accommodate the motor, the motor is configured to provide kinetic energy for the powertrain, the reducer end cover is configured to cover the reducer accommodating groove to form the reducer receptacle, the reducer receptacle is configured to accommodate the reducer, and the gear set of the reducer is configured to decelerate kinetic energy transmitted by the motor. The oil pump accommodating groove is configured to accommodate the oil pump. The oil pump is configured to convey the oil to the motor and the reducer separately via the two oil lines. The oil pump accommodating groove includes the groove opening, and the groove opening of the oil pump accommodating groove is away from the reducer accommodating groove along the axial direction of the powertrain. This facilitates mounting and arrangement of the oil pump, and helps reduce occupied space in the powertrain along the axial direction of the powertrain. In this embodiment of this application, the motor accommodating groove, the reducer accommodating groove, and the oil pump accommodating groove are integrated into the intermediate housing, so that a layout of the intermediate housing is more compact, to help reduce a size of the powertrain.

In an embodiment, the motor accommodating groove, the reducer accommodating groove, and the oil pump accommodating groove in the intermediate housing are of an integrally die-casted structure. In this way, the intermediate housing has a more centralized structure and higher structure strength. This facilitates miniaturization and lightweight of the powertrain. The groove openings of the motor accommodating groove and the reducer accommodating groove are away from each other along the axial direction of the powertrain. This facilitates performing of a drafting operation along the axial direction of the powertrain after the intermediate housing is die-casted. The groove opening of the oil pump accommodating groove is away from the reducer accommodating groove along the axial direction of the powertrain. This helps smoothly perform drafting of the intermediate housing.

In an embodiment, the oil pump accommodating groove includes a coarse filter accommodating section and an oil pump accommodating section. In this embodiment of this application, the coarse filter accommodating section is configured to accommodate a coarse filter, and the oil pump accommodating section is configured to accommodate the oil pump. The coarse filter is configured to filter and remove impurities from the oil input into the oil pump. This helps reduce the work load of the fine filter, and also ensures that the oil input into the reducer contains less impurities, thereby facilitating stable operation of the gear set of the reducer. In this embodiment of this application, a capability of the fine filter to filter the oil is better than a capability of the coarse filter to filter the oil, and a particle size of an impurity filtered by the fine filter is smaller than a particle size of an impurity filtered by the coarse filter.

In an embodiment, a groove wall of the oil pump accommodating groove includes a reducer oil outlet and a motor oil outlet, the motor oil outlet is configured to connect to an oil inlet of the one oil line, and the reducer oil outlet is configured to connect to an oil inlet of the other oil line. The reducer oil outlet and the motor oil outlet are arranged between the reducer accommodating groove and the groove opening of the oil pump accommodating groove along the axial direction of the powertrain. The reducer oil outlet and the motor oil outlet are distributed at an interval along a circumferential direction of the oil pump accommodating groove.

In this embodiment of this application, the reducer oil outlet and the motor oil outlet are located on the groove wall of the oil pump accommodating groove, so that the oil pump can pump oil into the reducer oil outlet and the motor oil outlet more smoothly. The motor oil outlet is configured to connect to the oil inlet of the one oil line. The oil pump conveys the oil to the one oil line via the motor oil outlet. The oil in the one oil line is filtered by the fine filter, cooled by the heat exchanger through heat exchange, and input into the motor receptacle to cool and lubricate the motor in the motor receptacle. The reducer oil outlet is configured to connect to the oil inlet of the other oil line. The oil pump directly conveys the oil to the reducer receptacle via the reducer oil outlet, to lubricate the gear set of the reducer in the reducer receptacle. In this embodiment of this application, the reducer oil outlet and the motor oil outlet may be formed by using a punching process. The process is simple, and implements distribution of the oil pumped out by the oil pump.

In this embodiment of this application, the reducer oil outlet and the motor oil outlet are arranged between the reducer accommodating groove and the groove opening of the oil pump accommodating groove along the axial direction of the powertrain. This helps reduce occupied space in the powertrain along the axial direction of the powertrain. In addition, the oil can flow into the reducer receptacle through the reducer oil outlet in a shorter path, to reduce the power loss.

In this embodiment of this application, the reducer oil outlet and the motor oil outlet are distributed at an interval along the circumferential direction of the oil pump accommodating groove. This facilitates interval arrangement of the one oil line connected to the motor oil outlet and the other oil line connected to the reducer oil outlet, and facilitates a more reasonable layout of pipes between the one oil line and the other oil line.

In an embodiment, the oil pump accommodating groove further includes an accommodating groove oil inlet, the accommodating groove oil inlet is configured to connect to the reducer receptacle, and along the axial direction of the powertrain, a distance between either of the reducer oil outlet and the motor oil outlet and the groove opening of the oil pump accommodating groove is shorter than a distance between either of the reducer oil outlet and the motor oil outlet and the accommodating groove oil inlet.

In this embodiment of this application, an oil storage pool is formed at the bottom of the reducer receptacle, and the accommodating groove oil inlet is configured to input oil in the oil storage pool into the oil pump accommodating groove. Then, the oil pump pumps out the oil to the reducer oil outlet and the motor oil outlet. The accommodating groove oil inlet is configured to connect to the reducer receptacle. The oil in the oil storage pool at the bottom of the reducer receptacle flows through the accommodating groove oil inlet and the oil pump accommodating groove sequentially and is pumped into the reducer oil outlet by the oil pump, and flows into the reducer receptacle from the one oil line to lubricate the gear set of the reducer. Then, the oil falls back to the oil storage pool at the bottom of the reducer receptacle. This forms an oil flowing circulation loop. The accommodating groove oil inlet is also referred to as an oil return hole.

In this embodiment of this application, the reducer oil outlet and the motor oil outlet are arranged between the reducer accommodating groove and the groove opening of the oil pump accommodating groove along the axial direction of the powertrain, and along the axial direction of the powertrain, the distance between either of the reducer oil outlet and the motor oil outlet and the groove opening of the oil pump accommodating groove is shorter than the distance between either of the reducer oil outlet and the motor oil outlet and the accommodating groove oil inlet. This helps shorten a path for the oil to enter the oil pump accommodating groove from the accommodating groove oil inlet and then flow to the reducer oil outlet and the motor oil outlet, reduce a pipe layout, and reduce production costs.

In an embodiment, the intermediate housing further includes a first hole and a reducer output shaft hole, the other oil line is die-casted in the intermediate housing, the first hole is configured to connect to the other oil line, the first hole is configured to accommodate a sealing member, and the reducer output shaft hole is configured to accommodate an output shaft of the reducer. An opening of the first hole is away from the oil pump accommodating groove along a radial direction of the oil pump accommodating groove. A distance between the first hole and the oil pump accommodating groove is longer than an inner diameter of the oil pump accommodating groove. The first hole is arranged between the reducer output shaft hole and the motor receptacle along an arrangement direction of the reducer output shaft hole and the motor receptacle. The distance between the first hole and the oil pump accommodating groove is longer than a minimum distance between an inner wall of the reducer output shaft hole and an inner wall of the motor receptacle.

In this embodiment of this application, the first hole helps process the other oil line inwards from an outer side of the intermediate housing. In an embodiment, the first hole and the other oil line are integrally die-casted, so that the other oil line and the first hole do not need to be processed separately. This helps reduce working procedures and reduce manufacturing difficulty of the other oil line. The sealing member is located in the first hole to seal the first hole, so as to prevent the oil in the other oil line from leaking from the first hole.

In this embodiment of this application, the opening of the first hole is away from the oil pump accommodating groove along the radial direction of the oil pump accommodating groove. This facilitates drafting from the opening of the first hole after the first hole and the other oil line are die-casted, so that a drafting process is smoother. The other oil line is die-casted in the intermediate housing, to avoid additional pipe arrangement, save materials of the intermediate housing, and help reduce production costs.

In this embodiment of this application, the distance between the first hole and the oil pump accommodating groove is longer than the inner diameter of the oil pump accommodating groove, and the distance between the first hole and the oil pump accommodating groove is long, in other words, a pipe of the other oil line is long. This helps maintain structural stability of the intermediate housing when the first hole and the other oil line are integrally die-casted with the intermediate housing. In addition, a far position of the first hole further helps that the position of the first hole does not affect arrangement of other components of the intermediate housing.

In this embodiment of this application, the first hole is arranged between the reducer output shaft hole and the motor receptacle along the arrangement direction of the reducer output shaft hole and the motor receptacle, so that space between the reducer output shaft hole and the motor receptacle is fully utilized, and arrangement of the other oil line in the intermediate housing is more reasonable. In addition, this helps reduce impact on the reducer output shaft hole and the motor receptacle in a process of integrally die-casting and drafting the first hole and the other oil line.

In this embodiment of this application, the distance between the first hole and the oil pump accommodating groove is longer than the minimum distance between the inner wall of the reducer output shaft hole and the inner wall of the motor receptacle, in other words, the distance between the first hole and the oil pump accommodating groove is long. This helps maintain structural stability of the intermediate housing when the first hole and the other oil line are integrally die-casted with the intermediate housing. In addition, the far position of the first hole further helps that the position of the first hole does not affect arrangement of other components of the intermediate housing.

In an embodiment, the intermediate housing further includes a throttle hole, and the throttle hole is configured to connect to the other oil line and the reducer receptacle. The throttle hole is arranged between the reducer output shaft hole and the motor receptacle along the arrangement direction of the reducer output shaft hole and the motor receptacle. The throttle hole is arranged between the first hole and the oil pump accommodating groove along an arrangement direction of the first hole and the oil pump accommodating groove. An opening of the throttle hole faces the reducer receptacle.

In this embodiment of this application, after the oil is pumped into the other oil line from the oil pump, the oil flows into the reducer receptacle through the throttle hole to lubricate the gear set of the reducer, and the oil passes through the oil pump accommodating groove, the reducer oil outlet, the other oil line, the throttle hole, and the reducer receptacle sequentially. The opening of the throttle hole faces the reducer receptacle. This helps the oil be input into the reducer receptacle more smoothly to lubricate the gear set of the reducer. The opening that is of the throttle hole and that faces the reducer receptacle can spray the oil into an oil sump to lubricate the gear set of the reducer.

In this embodiment of this application, the throttle hole is arranged between the reducer output shaft hole and the motor receptacle along the arrangement direction of the reducer output shaft hole and the motor receptacle, so that the throttle hole is opened in the pipe through which the oil in the other oil line flows. The throttle hole is arranged between the first hole and the oil pump accommodating groove along the arrangement direction of the first hole and the oil pump accommodating groove, so that the oil flows out of the throttle hole to the reducer receptacle in time when the oil flows in the other oil line. Therefore, an impact force exerted on the sealing member at the first hole in oil conveying is reduced, and this helps prevent the oil from breaking through the sealing member and leaking from the first hole.

In an embodiment, an aperture of the throttle hole is smaller than an aperture of the other oil line, so that a small part of oil enters the reducer receptacle to lubricate the gear set, and a large part of oil enters the motor receptacle to cool components such as the stator and the rotor. In this embodiment of this application, the throttle hole is used, so that an oil flow rate of the other oil line is less than an oil flow rate of the one oil line.

In an embodiment, the intermediate housing further includes a fine filter accommodating groove and a second hole, the fine filter accommodating groove is configured to accommodate the fine filter, the one oil line includes a first connection section, the first connection section is die-casted in the intermediate housing, the fine filter accommodating groove is connected to the motor oil outlet via the first connection section, the fine filter accommodating groove is further configured to connect to the heat exchanger, and the second hole is configured to connect to the fine filter accommodating groove and the motor oil outlet. A groove opening of the fine filter accommodating groove faces away from the reducer accommodating groove along the axial direction of the powertrain. The reducer oil outlet, the motor oil outlet, and the second hole are sequentially arranged at intervals along the circumferential direction of the oil pump accommodating groove. A distance between the second hole and the fine filter accommodating groove is shorter than an inner diameter of the fine filter accommodating groove, and a distance between the second hole and the oil pump accommodating groove is shorter than an inner diameter of the oil pump accommodating groove.

In this embodiment of this application, the second hole helps process the first connection section of the one oil line inwards from the outer side of the intermediate housing, to connect the fine filter accommodating groove to the motor oil outlet. The sealing member is located in the second hole to seal the second hole, so as to prevent the oil in the one oil line from leaking from the second hole. The fine filter filters and removes impurities from oil that flows into the fine filter from the first connection section of the one oil line, to obtain oil with high cleanliness. The fine filter accommodating groove is connected to the heat exchanger. The oil filtered by the fine filter flows into the heat exchanger, and after being cooled through heat exchange with coolant flowing through the heat exchanger, the oil is conveyed to the motor receptacle to cool and lubricate the motor.

In this embodiment of this application, the groove opening of the fine filter accommodating groove faces away from the reducer accommodating groove along the axial direction of the powertrain. This helps mount the fine filter in the fine filter accommodating groove in a direction away from the reducer accommodating groove, and helps draft the fine filter accommodating groove in the direction away from the reducer accommodating groove along the axial direction of the powertrain after the intermediate housing is integrally die-casted. The first connection section is die-casted in the intermediate housing, to help maintain structural stability of the intermediate housing, reduce pipe arrangement outside the intermediate housing, reduce an overall size of the powertrain, save die-casting materials, and reduce production costs.

In this embodiment of this application, the reducer oil outlet, the motor oil outlet, and the second hole are sequentially arranged at intervals along the circumferential direction of the oil pump accommodating groove. This helps reduce impact of the second hole on a die-casting process of the reducer oil outlet, the motor oil outlet, the one oil line, and the other oil line when the intermediate housing is die-casted.

In this embodiment of this application, the distance between the second hole and the fine filter accommodating groove is shorter than the inner diameter of the fine filter accommodating groove, and the distance between the second hole and the oil pump accommodating groove is shorter than the inner diameter of the oil pump accommodating groove, so that a structure between the second hole and the fine filter accommodating groove and a structure between the second hole and the oil pump accommodating groove are compact, and space for arranging the first connection section of the one oil line is narrow. A design of the second hole makes it possible to connect the fine filter accommodating groove to the motor oil outlet by performing processing inwards from the outer side of the intermediate housing.

In an embodiment, a groove wall of the fine filter accommodating groove includes a fine filter oil inlet, and the fine filter oil inlet is configured to connect to the second hole. A connection line between the fine filter oil inlet and the second hole intersects a connection line between the motor oil outlet and the second hole. An aperture of the second hole is larger than an aperture of the fine filter oil inlet and an aperture of the motor oil outlet.

In this embodiment of this application, the fine filter oil inlet is configured to receive oil from the first connection section of the one oil line to enter the fine filter, and the fine filter oil inlet is connected to the second hole, so that the fine filter oil inlet is formed by processing inwards from the outer side of the intermediate housing through the second hole. The connection line between the fine filter oil inlet and the second hole intersects the connection line between the motor oil outlet and the second hole. This helps process both the fine filter oil inlet and the motor oil outlet from the second hole to an inner side of the intermediate housing, so that the motor oil outlet is connected to the second hole, the fine filter oil inlet is connected to the second hole, and the fine filter oil inlet is connected to the motor oil outlet. In this way, one second hole can be processed to connect to an oil passage of the oil pump accommodating groove and the fine filter accommodating groove.

In this embodiment of this application, the aperture of the second hole is larger than the aperture of the fine filter oil inlet and the aperture of the motor oil outlet. This helps process from the outer side of the intermediate housing to the inner side of the intermediate housing from the second hole to obtain the fine filter oil inlet and the motor oil outlet.

In an embodiment, the intermediate housing includes a housing mounting surface, the housing mounting surface is configured to mount the reducer end cover, the housing mounting surface includes a housing oil outlet hole, the one oil line further includes a second connection section, the second connection section is die-casted in the intermediate housing, and the housing oil outlet hole is configured to connect to the fine filter accommodating groove via the second connection section. An opening of the housing oil outlet hole faces away from the groove opening of the fine filter accommodating groove or the groove opening of the oil pump accommodating groove along the axial direction of the powertrain.

In this embodiment of this application, the housing mounting surface is fastened to the reducer end cover, and the housing mounting surface may be a flat surface or a concave-convex surface, provided that it is ensured that the housing mounting surface can be fastened to the reducer end cover.

In this embodiment of this application, the second connection section is die-casted in the intermediate housing, to help maintain structural stability of the intermediate housing, reduce pipe arrangement outside the intermediate housing, reduce an overall size of the powertrain, save die-casting materials, and reduce production costs.

In an embodiment, the reducer end cover includes an end cover mounting surface, the end cover mounting surface is configured to fasten the housing mounting surface, the end cover mounting surface includes an end cover oil inlet hole, the one oil line further includes a third connection section, the third connection section is die-casted in the reducer end cover, and the end cover oil inlet hole is configured to connect to the housing oil outlet hole and connect to the heat exchanger via the third connection section. An opening of the end cover oil inlet hole faces the intermediate housing along the axial direction of the powertrain. A projection of the end cover oil inlet hole at least partially overlaps with a projection of the housing oil outlet hole along the axial direction of the powertrain.

In this embodiment of this application, the end cover oil inlet hole is configured to: receive oil that flows out of the housing oil outlet hole from the second connection section of the one oil line of the intermediate housing, and convey the oil to the heat exchanger via the third connection section. The oil exchanges heat with the coolant in the heat exchanger to be cooled, and the oil sequentially passes through the oil pump accommodating groove, the motor oil outlet, the first connection section, the fine filter oil inlet, the fine filter accommodating groove, a second radial connection section, a second axial connection section, the housing oil outlet hole, the end cover oil inlet hole, and the third connection section and flows into the heat exchanger.

In this embodiment of this application, the third connection section is die-casted in the reducer end cover, and a length direction of a third radial connection section is arranged along a direction perpendicular to the axial direction of the powertrain. This helps smoothly perform die-casting and drafting of the third connection section, and helps reduce pipe arrangement outside the reducer end cover, reduce an overall size of the powertrain, save die-casting materials, and reduce production costs.

In this embodiment of this application, the opening of the end cover oil inlet hole faces the intermediate housing along the axial direction of the powertrain, so that the end cover oil inlet hole can more smoothly receive the oil conveyed from the intermediate housing. The projection of the end cover oil inlet hole at least partially overlaps with the projection of the housing oil outlet hole along the axial direction of the powertrain, so that the end cover oil inlet hole can more smoothly receive the oil from the housing oil outlet hole.

In an embodiment, the reducer end cover further includes a heat exchanger mounting surface, the heat exchanger mounting surface is configured to mount the heat exchanger, the heat exchanger mounting surface includes a heat exchange oil inlet hole and a heat exchange oil outlet hole, the end cover oil inlet hole is configured to connect to the heat exchange oil outlet hole via the third connection section, the heat exchange oil outlet hole is configured to connect to an oil inlet of the heat exchanger, and the heat exchange oil inlet hole is configured to connect to an oil outlet of the heat exchanger. The end cover mounting surface further includes an end cover oil outlet hole, the one oil line further includes a fourth connection section, the fourth connection section is die-casted in the reducer end cover, and the end cover oil outlet hole is configured to connect to the heat exchange oil inlet hole via the fourth connection section. An opening of the end cover oil outlet hole faces a same direction as the opening of the end cover oil inlet hole. The heat exchanger mounting surface and the end cover mounting surface are away from each other along the axial direction of the powertrain. Openings of the heat exchange oil inlet hole and the heat exchange oil outlet hole both face away from the opening of the end cover oil inlet hole.

In this embodiment of this application, the fourth connection section is die-casted in the reducer end cover. This helps reduce pipe arrangement outside the reducer end cover, reduce an overall size of the powertrain, implement miniaturization of the powertrain, save die-casting materials, and reduce production costs. In an embodiment, the reducer end cover further includes a fifth hole, the fifth hole is coaxial with an oil outlet hole and a fourth radial connection section, and the fifth hole is configured to form the oil outlet hole and the fourth radial connection section inside the reducer end cover.

In this embodiment of this application, the opening of the end cover oil outlet hole faces the same direction as the opening of the end cover oil inlet hole, and the opening of the end cover oil outlet hole and the opening of the end cover oil inlet hole both face the intermediate housing along the axial direction of the powertrain. The opening of the end cover oil inlet hole faces the intermediate housing. This helps more smoothly receive oil output from the housing oil outlet hole of the intermediate housing. The opening of the end cover oil outlet hole faces the intermediate housing. This helps more smoothly input oil output from the end cover oil outlet hole into an internal oil passage of the intermediate housing.

In this embodiment of this application, the heat exchanger mounting surface and the end cover mounting surface are away from each other along the axial direction of the powertrain. This facilitates mounting of the heat exchanger on the reducer end cover housing in a direction away from the intermediate housing along the axial direction of the powertrain, and facilitates connection between the fourth connection section and the heat exchanger. The heat exchange oil inlet hole and the heat exchange oil outlet hole are respectively connected to the oil inlet and the oil outlet of the heat exchanger, and the openings of the heat exchange oil inlet hole and the heat exchange oil outlet hole both face away from the opening of the end cover oil inlet hole. This facilitates mounting and fastening of the heat exchanger on the reducer end cover, and facilitates a smoother path of oil flowing into the heat exchanger from the end cover oil inlet hole.

In an embodiment, the housing mounting surface further includes a housing oil inlet hole, the one oil line further includes a fifth connection section, the fifth connection section is die-casted in the intermediate housing, and the housing oil inlet hole is configured to connect to the end cover oil outlet hole and connect to the motor receptacle via the fifth connection section. An opening of the housing oil inlet hole faces a same direction as the opening of the housing oil outlet hole. A projection of the housing oil inlet hole at least partially overlaps with a projection of the end cover oil outlet hole along the axial direction of the powertrain.

In this embodiment of this application, the fifth connection section is die-casted in the intermediate housing, to help maintain structural stability of the intermediate housing, reduce pipe arrangement outside the intermediate housing, reduce an overall size of the powertrain, save die-casting materials, and reduce production costs.

In this embodiment of this application, the housing oil inlet hole is configured to receive oil output from the end cover oil outlet hole, and the oil sequentially passes through the fourth connection section, the end cover oil outlet hole, the housing oil inlet hole, and the fifth connection section and flows into the motor receptacle from an oil outlet hole of the fifth connection section, to cool and lubricate the motor.

In this embodiment of this application, the opening of the housing oil inlet hole faces the same direction as the opening of the housing oil outlet hole, and the opening of the housing oil inlet hole and the opening of the housing oil outlet hole both face the reducer end cover along the axial direction of the powertrain. The opening of the housing oil inlet hole faces the reducer end cover. This helps receive oil output from the end cover oil outlet hole of the reducer end cover. The housing oil outlet hole faces the reducer end cover. This helps the housing oil outlet hole output oil to the end cover oil inlet hole of the reducer end cover. The projection of the housing oil inlet hole at least partially overlaps with the projection of the end cover oil outlet hole along the axial direction of the powertrain. This helps oil more smoothly flow into the end cover oil outlet hole from the housing oil inlet hole, and then flow into the motor receptacle through the fifth connection section to cool and lubricate the motor.

According to a second aspect, an embodiment of this application provides an electric vehicle. The electric vehicle includes a vehicle body, a cooling system, and the powertrain according to any one of the foregoing content, the vehicle body is configured to fasten the powertrain and the cooling system, the cooling system is configured to perform heat exchange with a heat exchanger in the powertrain, and the powertrain is configured to provide power for wheels of the electric vehicle. In this embodiment of this application, the powertrain separately conveys, via two oil lines, oil with different quality or temperatures to a motor receptacle and a reducer receptacle, to implement tiered cooling or oil quality tiering for a motor and a reducer. The motor that has a high requirement on oil cleanliness is cooled and lubricated, and oil input into the reducer receptacle is not filtered by a fine filter and heat-exchanged by the heat exchanger. This can effectively reduce work load of the fine filter and the heat exchanger. In addition, when hot oil that is not cooled is conveyed to a gear set of the reducer, a viscosity of the hot oil is lower than a viscosity of cold oil. This helps reduce resistance of the gear set during rotation and lubrication, reduce an oil churning loss, and reduce a power loss. In this way, overall working efficiency of the powertrain is improved, and overall performance of the electric vehicle is improved.

### BRIEF DESCRIPTION OF DRAWINGS

To describe technical solutions in embodiments of this application more clearly, the following describes accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a diagram of a structure of a powertrain according to an embodiment of this application;
FIG. 4 is a diagram of a structure of a powertrain according to an embodiment of this application;
FIG. 5 is a sectional view of the powertrain in FIG. 4 along A-A;
FIG. 6 is a diagram of a structure of a powertrain according to an embodiment of this application;
FIG. 7 is a partial sectional view of a powertrain according to an embodiment of this application;
FIG. 8 is a diagram of a structure of an intermediate housing according to an embodiment of this application;
FIG. 9 is a diagram of a structure of an intermediate housing according to an embodiment of this application;
FIG. 10 is a partial enlarged diagram of a part M1 in FIG. 5;
FIG. 11 is a diagram of a structure of a reducer end cover according to an embodiment of this application; and
FIG. 12 is a sectional view of the powertrain in FIG. 4 along B-B.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes related technical terms in embodiments of this application.

Parallelism: Parallelism defined in embodiments of this application is not limited to absolute parallelism. A definition of the parallelism may be understood as basic parallelism, and a case in which non-absolute parallelism is caused by factors such as an assembly tolerance, a design tolerance, and a structural flatness is allowed.

Verticality: Verticality defined in embodiments of this application is not limited to an absolute vertical intersection (an included angle is 90 degrees) relationship, a non-absolute vertical intersection relationship caused by factors such as an assembly tolerance, a design tolerance, and a structural flatness is allowed, and an error within a small angle range is allowed. For example, a relationship within an assembly error range of 80 degrees to 100 degrees may be understood as the vertical relationship.

It is considered that a motor and a reducer have different temperature and quality requirements on lubricating oil for cooling and lubrication. Embodiments of this application provide a powertrain with dual-line oil cooling and lubrication. The powertrain includes a housing, an oil pump, a motor, a reducer, and two oil lines. The housing includes a motor receptacle and a reducer receptacle. The motor receptacle is configured to accommodate a stator and a rotor of the motor, the reducer receptacle is configured to accommodate a gear set of the reducer, and the two oil lines are configured to convey oil to the motor receptacle and the reducer receptacle respectively. One oil line is configured to connect to at least one of an outlet of the oil pump, a fine filter, and a heat exchanger, and the motor receptacle, the fine filter is configured to filter impurities of oil flowing through the one oil line, and the heat exchanger is configured to cool the oil flowing through the one oil line. The other oil line is configured to directly connect to another outlet of the oil pump and the reducer receptacle. In embodiments of this application, the two oil lines are arranged. Oil flowing into the motor through one oil line is finely filtered and cooled through heat exchange, to meet a high requirement of the motor on oil cleanliness and implement cooling and lubrication, and oil flowing into the reducer is directly coarsely filtered and then input by the oil pump into a gear train of the reducer to lubricate the reducer. This effectively reduces work load of the fine filter for filtering and the heat exchanger for heat exchange cooling, and improves cooling and lubrication efficiency of the one oil line. Hot oil that is not cooled by the heat exchanger in the other oil line has a small viscosity and lubricates the gear set of the reducer. This can reduce resistance of the gear set during rotation, reduce an oil churning loss, and reduce a power loss. Layout of the two oil lines also helps reduce flow resistance in an oil flowing process and improve an oil supply capability of the oil pump.

The powertrain 10 with dual-line oil cooling and lubrication provided in embodiments of this application is used in an electric vehicle 1, to improve overall performance of the electric vehicle 1.

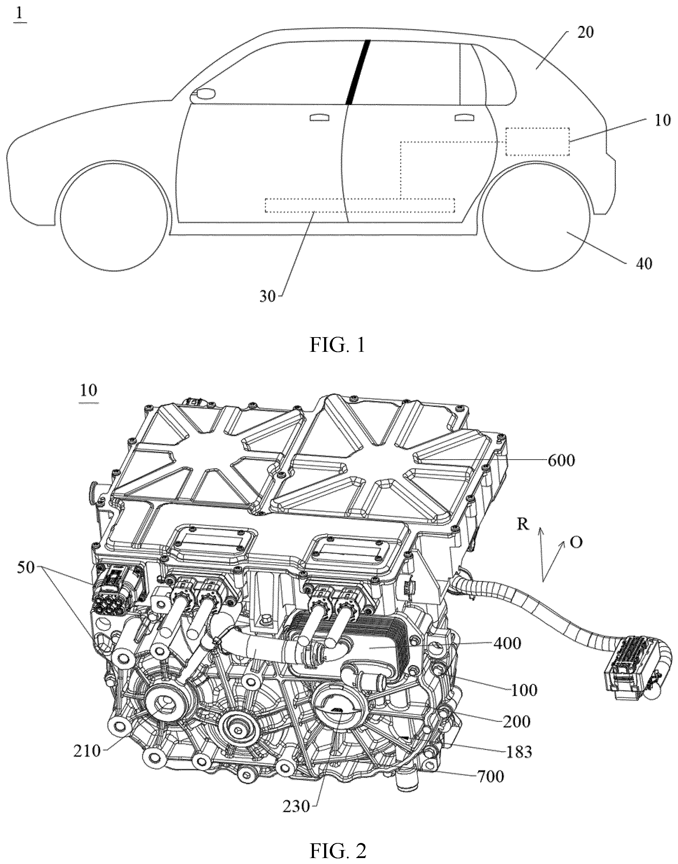

FIG. 1 is a diagram of a structure of the electric vehicle 1 according to an embodiment of this application. In this embodiment of this application, the electric vehicle 1 includes a powertrain 10, a vehicle body 20, a battery pack 30, and wheels 40. The powertrain 10 and the battery pack 30 are fastened to the vehicle body 20. The powertrain 10 is configured to receive power supplied by the battery pack 30, and is configured to drive the wheels 40.

In this embodiment of this application, the battery pack 30 may also be referred to as a power battery.

In this embodiment of this application, the electric vehicle 1 is a wheeled device driven or pulled by a power apparatus.

The following describes in detail the powertrain 10 provided in embodiments of this application.

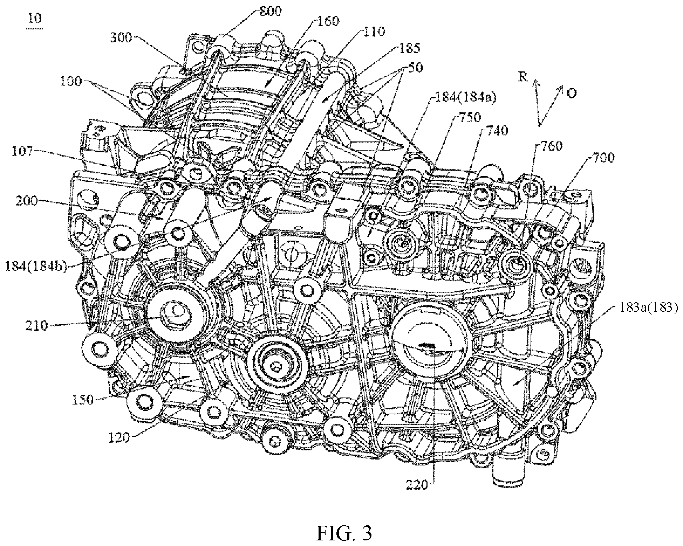

Refer to FIG. 2 and FIG. 3. FIG. 2 is a diagram of a structure of the powertrain 10 according to an embodiment of this application, and FIG. 3 is a diagram of a structure of the powertrain 10 according to an embodiment of this application. In an embodiment, the powertrain 10 includes an intermediate housing 100, a reducer 200, a motor 300, and a heat exchanger 400 (as shown in FIG. 2). The intermediate housing 100 includes a reducer receptacle 150 and a motor receptacle 160 (as shown in FIG. 3). The motor receptacle 160 is configured to accommodate the motor 300, and the reducer receptacle 150 is configured to accommodate the reducer 200. The motor 300 converts electric energy provided by a motor controller 600 (as shown in FIG. 2) into kinetic energy, and transmits the kinetic energy to an input shaft 210 of the reducer 200. The input shaft 210 transmits power to a gear inside the reducer 200, and an output shaft 220 of the reducer 200 is configured to transmit the power of the motor 300 to the wheels 40. It should be noted that in FIG. 2 and FIG. 3, the input shaft 210 is a schematic position of the input shaft 210, and the output shaft 220 of the reducer is a schematic position of the output shaft 220 of the reducer.

In this embodiment of this application, the motor 300 includes a stator, a rotor, and a motor shaft (not shown in the figure), and the rotor is fastened to the motor shaft. The reducer 200 includes the input shaft 210, an intermediate shaft, the output shaft 220, a gear train (not shown in the figure), and the like. The motor shaft is in transmission connection to the input shaft 210 of the reducer 200, and the gear train in the reducer 200 rotates to reduce power output by the motor shaft.

In this embodiment of this application, the intermediate housing 100 may also be referred to as an assembly housing 100, a die-casted housing 100, an electric drive housing 100, or the like. In this embodiment of this application, the intermediate housing 100 is integrally die-casted.

In this embodiment of this application, as shown in FIG. 2, the reducer receptacle 150 and the motor receptacle 160 penetrate the intermediate housing 100 along an axial direction O of the powertrain. The motor receptacle 160 is connected to the reducer receptacle 150. The motor receptacle 160 and the reducer receptacle 150 are arranged along the axial direction O of the powertrain, and a projection of the motor receptacle 160 partially overlaps with a projection of the reducer receptacle 150 along the axial direction O of the powertrain. It should be noted that the input shaft 210 of the reducer 200 herein is a schematic position of the input shaft 210 of the reducer 200. A projection along the axial direction O of the powertrain refers to a projection along the axial direction O of the powertrain on a projection surface perpendicular to an axial direction R of the powertrain, and a projection surface of the projection along the axial direction O of the powertrain is perpendicular to the axial direction O of the powertrain.

Still refer to FIG. 2 and FIG. 3. In an embodiment, the powertrain 10 further includes the motor controller 600. The motor controller 600 is configured to: receive a direct current of the battery pack 30 (as shown in FIG. 1), and output an alternating current to the motor 300. The stator of the motor 300 is configured to: receive the alternating current output by the motor controller 600, and drive the rotor and the motor shaft of the motor 300 to rotate. The motor shaft rotates and drives the input shaft 210 to rotate.

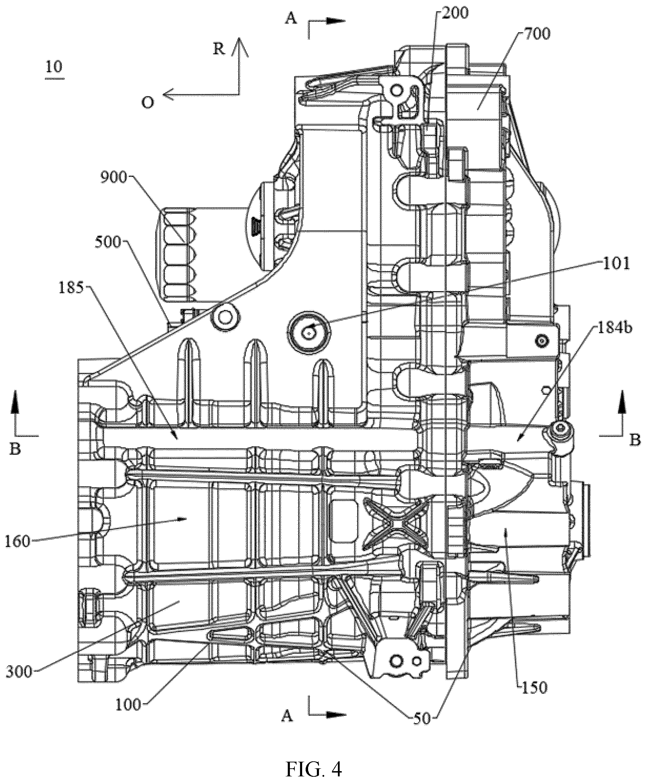

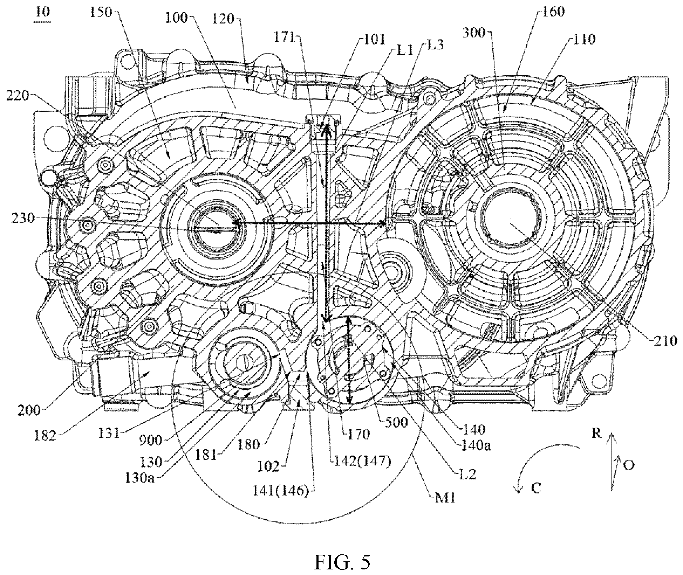

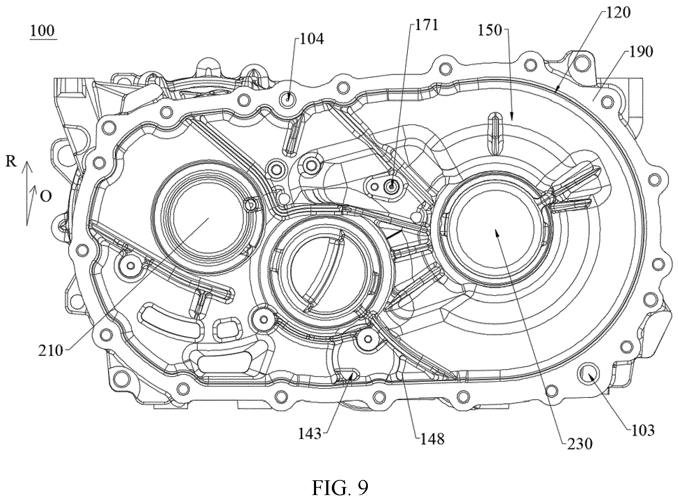

Refer to FIG. 4 and FIG. 5. FIG. 4 is a diagram of a structure of the powertrain 10 according to an embodiment of this application, and FIG. 5 is a sectional view of the powertrain 10 in FIG. 4 along A-A. In an embodiment, the powertrain 10 includes an oil pump 500, and the oil pump 500 is configured to convey lubricating oil in an oil storage pool 148 of the reducer receptacle 150 to the reducer receptacle 150 and the motor receptacle 160. The oil storage pool 148 (as shown in FIG. 9) is located at the bottom of the reducer receptacle 150.

Refer to FIG. 4 and FIG. 5. In an embodiment, the powertrain 10 with dual-line oil cooling and lubrication is provided. The powertrain 10 includes a housing 50, the oil pump 500, the motor 300, the reducer 200 (as shown in FIG. 4), and two oil lines 170 and 180 (as shown in FIG. 5). The housing 50 includes the motor receptacle 160 and the reducer receptacle 150 (as shown in FIG. 4). The motor receptacle 160 is configured to accommodate the stator and the rotor of the motor 300. The reducer receptacle 150 is configured to accommodate a gear set of the reducer 200. The two oil lines 170 and 180 are configured to convey oil to the motor receptacle 160 and the reducer receptacle 150 respectively. The oil line 180 is configured to connect to at least one of an outlet of the oil pump 500, a fine filter 900, and the heat exchanger 400 (as shown in FIG. 2), and the motor receptacle 160, the fine filter 900 is configured to filter impurities of oil flowing through the oil line 180, and the heat exchanger 400 is configured to cool the oil flowing through the oil line 180. The oil line 170 is configured to directly connect to another outlet of the oil pump 500 and the reducer receptacle 150.

In this embodiment of this application, the oil pump 500 is configured to: provide oil pressure for the oil, and drive the oil to be conveyed into the reducer 200 or the motor 300 to cool and lubricate the motor 300 or the reducer 200.

In this embodiment of this application, the oil line 180 is configured to sequentially connect to the outlet of the oil pump 500, the fine filter 900, the heat exchanger 400, and the motor receptacle 160, and the oil conveyed by the oil line 180 sequentially passes through the fine filter 900, the heat exchanger 400, and the motor receptacle 160, and reaches the stator and the rotor of the motor 300. The fine filter 900 is configured to filter the oil, to obtain high-quality oil with high cleanliness, and prevent excessive impurities from entering an air gap between the stator and the rotor and affecting operation of the motor. The heat exchanger 400 is configured to receive oil from the fine filter 900 to perform heat exchange on the oil, and the cooled oil is configured to cool and lubricate the rotor, the stator, a bearing, or the like of the motor 300, to facilitate temperature rise control on the powertrain 10.

In this embodiment of this application, the oil line 170 is configured to directly input the oil pumped out by the oil pump 500 into the reducer receptacle 150 to lubricate the gear set of the reducer 200. The oil sequentially passes through the oil pump 500 and the reducer receptacle 150 and reaches the reducer 200. The oil in the oil line 170 is not cooled by the heat exchanger 400, and maintains a high temperature. The hot oil has a low viscosity, and the hot oil entering the reducer 200 may reduce rotation resistance of the gear set of the reducer 200, reduce an oil churning loss, and reduce a power loss. In addition, a gear clearance of the reducer 200 has a lower requirement on impurities in the oil than the air gap between the stator and the rotor of the motor 300, so that the oil that does not pass through the fine filter 900 has little impact on working of the gear set of the reducer 200, and work load of the fine filter 900 and oil pump 500 can be reduced.

In this embodiment of this application, the two oil lines 170 and 180 works at the same time. This helps reduce system resistance when oil flows in the oil lines, and improve an oil supply capability of the oil pump 500. The oil that is filtered by the fine filter 900 and heat-exchanged by the heat exchanger 400 is input into the motor 300 that has a high requirement on oil cleanliness for cooling and lubrication, and the oil that is input into the reducer receptacle 150 is not filtered by the fine filter 900 and heat-exchanged by the heat exchanger 400, so that work load of the fine filter 900 and the heat exchanger 400 can be effectively reduced. In addition, when hot oil that is not cooled is conveyed to the gear set of the reducer 200, a viscosity of the hot oil is lower than a viscosity of cold oil. This helps reduce resistance of the gear set during rotation and lubrication, reduce an oil churning loss, and reduce a power loss.

In an embodiment, the oil pump 500 of the powertrain 10 is lower than the heat exchanger 400 along a gravity direction, so that the oil pump 500 can more smoothly suck oil at a lower level of the reducer receptacle 150, and working efficiency is improved. The heat exchanger 400 is mounted at a high position. This facilitates a layout of components of the powertrain.

Still refer to FIG. 4 and FIG. 5. In an embodiment, the oil line 180 is configured to connect to the outlet of the oil pump 500, the fine filter 900, and the motor receptacle 160, and the fine filter 900 is configured to filter impurities of oil flowing through the oil line 180.

In this embodiment of this application, the fine filter 900 is configured to obtain oil with high cleanliness, the motor receptacle 160 is configured to accommodate the motor 300, the motor 300 includes the stator and the rotor, and the oil conveyed by the oil line 180 sequentially passes through the fine filter 900 and the motor receptacle 160 to cool and lubricate the stator and the rotor of the motor 300, to facilitate temperature rise control on the powertrain 10.

Refer to FIG. 2 and FIG. 5. In an embodiment, the oil line 180 is configured to connect to the outlet of the oil pump 500, the heat exchanger 400 (as shown in FIG. 2), and the motor receptacle 160, and the heat exchanger 400 is configured to cool the oil flowing through the oil line 180.

In this embodiment of this application, oil conveyed by the oil line 180 sequentially passes through the heat exchanger 400 and the motor receptacle 160, and the motor receptacle 160 inputs oil cooled by the heat exchanger 400 through heat exchange, to cool and lubricate the stator and the rotor of the motor 300, so as to facilitate temperature rise control on the powertrain 10.

Still refer to FIG. 2 and FIG. 5. In an embodiment, the powertrain 10 includes one oil pump 500, and the one oil pump 500 is configured to: drive the oil in the oil line 180 to pass through at least one of the fine filter 900 and the heat exchanger 400 (as shown in FIG. 2) from an outlet 141 of the one oil pump 500 and then enter the motor receptacle 160, where the fine filter 900 is configured to filter the impurities of the oil, and the heat exchanger 400 is configured to cool the oil; and drive the oil in the oil line 170 to directly enter the reducer receptacle 150 from an outlet 142 of the one oil pump 500 without passing through at least one of the fine filter 900 and the heat exchanger 400.

In this embodiment of this application, the oil pump 500 is configured to increase oil pressure of the oil. The one oil pump 500 includes two outlets 141 and 142 (as shown in FIG. 5). The outlet 141 is configured to output the oil that is in the oil line 180 and that is pumped out by the oil pump 500, and the oil sequentially passes through the fine filter 900, the heat exchanger 400, and the motor receptacle 160. This helps ensure that oil entering the motor receptacle 160 is oil with high cleanliness, improve reliability of the motor 300 during running, and improve overall performance of the entire vehicle. The outlet 142 is configured to output the oil that is in the oil line 170 and that is pumped out by the oil pump 500, and the oil is directly input into the reducer receptacle 150 from the outlet 142 of the oil pump 500. This helps shorten a path for the oil to reach the reducer receptacle 150, so that the oil is provided more quickly to lubricate the gear set of the reducer 200. The oil in the oil line 170 does not pass through the fine filter 900 and the heat exchanger 400. This further helps reduce the work load of the fine filter 900 and the heat exchanger 400, and improve cooling and lubrication efficiency. The hot oil having the low viscosity can reduce the rotation resistance of the gear set of the reducer 200. This helps reduce the power loss.

Still refer to FIG. 2 and FIG. 5. In an embodiment, the outlet 141 is configured to output the oil that is in the oil line 180 and that is pumped out by the oil pump 500, and the oil sequentially passes through the heat exchanger 400 (as shown in FIG. 2) and the motor receptacle 160. This helps implement that the oil entering the motor receptacle 160 is cold oil, thereby implementing cooling and lubrication of the motor 300 and cooling of the motor 300, to facilitate temperature rise control on the powertrain 10.

Still refer to FIG. 2 and FIG. 5. In an embodiment, the one oil pump 500 is configured to drive the oil in the oil line 180 to sequentially pass through the fine filter 900 and the heat exchanger 400 (as shown in FIG. 2) and then enter the motor receptacle 160.

In this embodiment of this application, the oil in the oil line 180 is filtered by the fine filter 900 and heat-exchanged by the heat exchanger 400 sequentially, so that the oil entering the motor receptacle 160 is cooled oil with high cleanliness, to cool and lubricate the motor 300. This ensures normal working of the motor 300, and facilitates temperature rise control on the powertrain 10.

In an embodiment, the two oil lines 170 and 180 may be two pipes fastened to the housing 50, and a structure of the two pipes makes a preparation process of the powertrain 10 simpler and facilitates maintenance. In an embodiment, the two oil lines 170 and 180 are oil passages integrated inside the housing 50, so that the powertrain 10 has a simple overall structure, a small size, and a light weight. This facilitates miniaturization and integration of the powertrain 10.

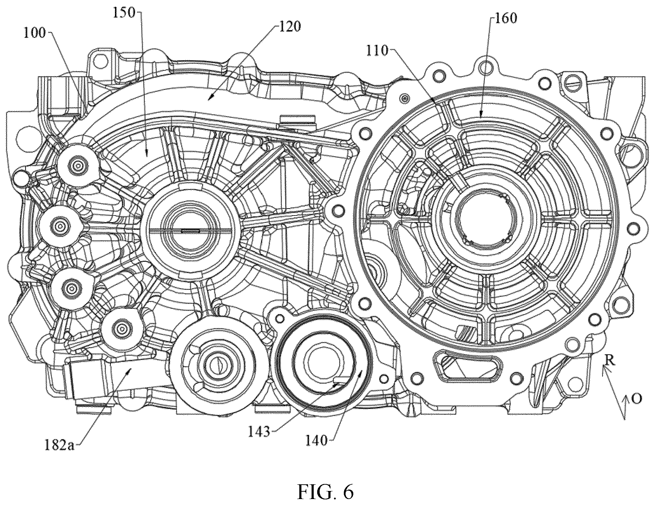

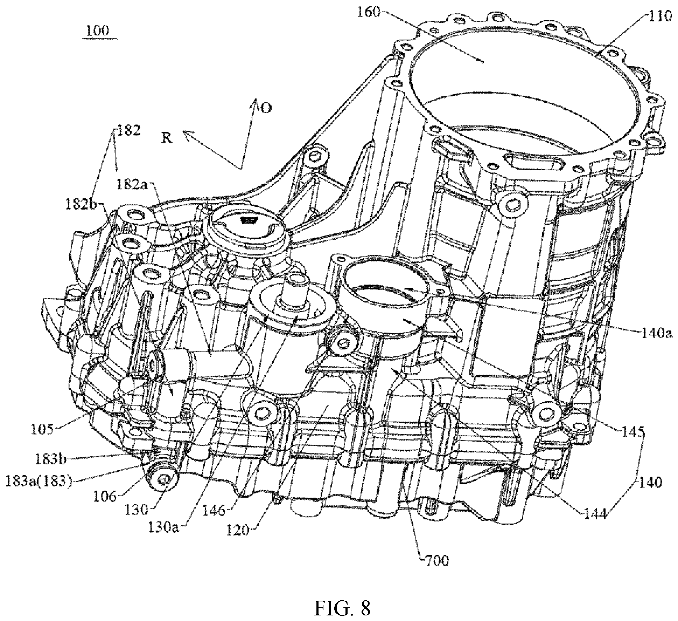

Still refer to FIG. 3, FIG. 5, and FIG. 6. FIG. 6 is a diagram of a structure of the powertrain 10 according to an embodiment of this application. In an embodiment, the housing 50 includes the intermediate housing 100, a motor end cover 800, and a reducer end cover 700 (as shown in FIG. 3), the intermediate housing 100 includes a motor accommodating groove 110 (as shown in FIG. 6), a reducer accommodating groove 120 (as shown in FIG. 9), and an oil pump accommodating groove 140 (as shown in FIG. 6), groove openings of the motor accommodating groove 110 and the reducer accommodating groove 120 are away from each other along the axial direction O of the powertrain, the motor accommodating groove 110 and the motor end cover 800 form the motor receptacle 160 through enclosing, the reducer accommodating groove 120 and the reducer end cover 700 form the reducer receptacle 150 through enclosing, and the oil pump accommodating groove 140 is configured to accommodate the oil pump 500 (as shown in FIG. 5). The oil pump accommodating groove 140 and the motor accommodating groove 110 are arranged along a radial direction R of the powertrain. The oil pump accommodating groove 140 includes a groove opening 140a (as shown in FIG. 8), and the groove opening 140a of the oil pump accommodating groove 140 is away from the reducer accommodating groove 120 along the axial direction O of the powertrain.

In this embodiment of this application, the intermediate housing 100 is integrally die-casted, the motor accommodating groove 110 is configured to accommodate the motor 300, and the reducer accommodating groove 120 is configured to accommodate the reducer 200 (as shown in FIG. 5). The groove openings of the motor accommodating groove 110 and the reducer accommodating groove 120 are away from each other along the axial direction O of the powertrain. This facilitates performing of a drafting operation along the axial direction O of the powertrain after the intermediate housing 100 is die-casted. The motor end cover 800 is configured to cover the motor accommodating groove 110 to form the motor receptacle 160, the motor receptacle 160 is configured to accommodate the motor 300 (as shown in FIG. 5), the motor 300 is configured to provide kinetic energy for the powertrain 10, the reducer end cover 700 is configured to cover the reducer accommodating groove 120 to form the reducer receptacle 150, the reducer receptacle 150 is configured to accommodate the reducer 200, and the gear set of the reducer 200 is configured to decelerate kinetic energy transmitted by the motor 300. The oil pump accommodating groove 140 is configured to accommodate the oil pump 500. The oil pump 500 is configured to convey the oil to the motor 300 and the reducer 200 separately via the two oil lines 170 and 180 (as shown in FIG. 5). The oil pump accommodating groove 140 includes the groove opening 140a, and the groove opening 140a of the oil pump accommodating groove 140 is away from the reducer accommodating groove 120 along the axial direction O of the powertrain. This facilitates mounting and arrangement of the oil pump 500, helps smoothly perform drafting of the intermediate housing 100, and helps reduce occupied space in the powertrain 10 along the axial direction O of the powertrain.

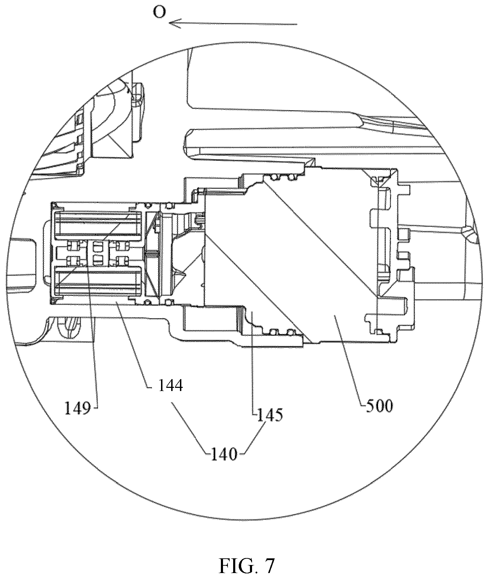

Refer to FIG. 5 and FIG. 7. FIG. 7 is a partial sectional view of the powertrain 10 according to an embodiment of this application. In an embodiment, the oil pump accommodating groove 140 includes a coarse filter accommodating section 144 and an oil pump accommodating section 145 (as shown in FIG. 7).

In this embodiment of this application, the coarse filter accommodating section 144 is configured to accommodate a coarse filter 149, and the oil pump accommodating section 145 is configured to accommodate the oil pump 500 (as shown in FIG. 7). The coarse filter 149 is configured to filter and remove impurities from the oil input into the oil pump 500. This helps reduce the work load of the fine filter 900, and also ensures that the oil input into the reducer 200 contains less impurities, thereby facilitating stable operation of the gear set of the reducer 200. In this embodiment of this application, a capability of the fine filter 900 to filter the oil is better than a capability of the coarse filter 149 to filter the oil, and a particle size of an impurity filtered by the fine filter 900 is smaller than a particle size of an impurity filtered by the coarse filter 149.

Refer to FIG. 3. In an embodiment, the motor end cover 800, the intermediate housing 100, and the reducer end cover 700 are sequentially arranged along the axial direction O of the powertrain, and along the axial direction O of the powertrain, a projection of the motor end cover 800 partially overlaps with a projection of the reducer end cover 700, and the projection of the reducer end cover 700 overlaps with a projection of the intermediate housing 100. In this embodiment of this application, this helps reduce occupied space in the powertrain 10 along a direction perpendicular to the axial direction O of the powertrain, and facilitates miniaturization arrangement of the powertrain 10.

Refer to FIG. 5 and FIG. 8. FIG. 8 is a diagram of a structure of an intermediate housing 100 according to an embodiment of this application. In an embodiment, a groove wall of the oil pump accommodating groove 140 includes a reducer oil outlet 147 and a motor oil outlet 146, the motor oil outlet 146 is configured to connect to an oil inlet of the oil line 180, and the reducer oil outlet 147 is configured to connect to an oil inlet of the oil line 170. The reducer oil outlet 147 and the motor oil outlet 146 are arranged between the reducer accommodating groove 120 and the groove opening 140a of the oil pump accommodating groove 140 along the axial direction O of the powertrain (as shown in FIG. 8). The reducer oil outlet 147 and the motor oil outlet 146 are distributed at an interval along a circumferential direction C of the oil pump accommodating groove 140 (as shown in FIG. 5).

In this embodiment of this application, the reducer oil outlet 147 and the motor oil outlet 146 are located on the groove wall of the oil pump accommodating groove 140, so that the oil pump 500 can pump oil into the reducer oil outlet 147 and the motor oil outlet 146 more smoothly. The motor oil outlet 146 is configured to connect to the oil inlet of the oil line 180. The oil pump 500 conveys the oil to the oil line 180 via the motor oil outlet 146. The oil in the oil line 180 is filtered by the fine filter 900, cooled by the heat exchanger 400 (as shown in FIG. 2) through heat exchange, and input into the motor receptacle 160 to cool and lubricate the motor 300 in the motor receptacle 160. The reducer oil outlet 147 and the motor oil outlet 146 are formed by using a punching process. The process is simple, and implements distribution of the oil pumped out by the oil pump 500. The reducer oil outlet 147 is configured to connect to the oil inlet of the oil line 170. The oil pump 500 directly conveys the oil to the reducer receptacle 150 via the reducer oil outlet 147, to lubricate the gear set of the reducer 200 in the reducer receptacle 150.

In this embodiment of this application, the reducer oil outlet 147 and the motor oil outlet 146 are arranged between the reducer accommodating groove 120 and the groove opening 140a of the oil pump accommodating groove 140 along the axial direction O of the powertrain. This helps reduce occupied space in the powertrain 10 along the axial direction O of the powertrain. In addition, the oil can flow into the reducer receptacle 150 through the reducer oil outlet 147 in a shorter path, to reduce the power loss.

In this embodiment of this application, the reducer oil outlet 147 and the motor oil outlet 146 are distributed at an interval along the circumferential direction C of the oil pump accommodating groove 140. This facilitates interval arrangement of the oil line 180 connected to the motor oil outlet 146 and the oil line 170 connected to the reducer oil outlet 147, and facilitates a more reasonable layout of pipes between the oil line 180 and the oil line 170.

In this embodiment of this application, the reducer oil outlet 147 and the motor oil outlet 146 are correspondingly connected to the foregoing two outlets 141 and 142 respectively. In an embodiment, the reducer oil outlet 147 is the same as the outlet 141, and the motor oil outlet 146 is the same as the outlet 142.

In an embodiment, the oil pump accommodating groove 140 includes only one outlet, the outlet is connected to one total oil line inside the intermediate housing 100, and an outlet of the total oil line is divided into two oil lines 170 and 180. In this embodiment of this application, there is one total oil line between the oil inlets of the two oil lines 170 and 180 and one outlet of the oil pump accommodating groove 140.

In an embodiment, when an axial length of the intermediate housing 100 is long enough, the reducer oil outlet 147 and the motor oil outlet 146 may be arranged in a staggered manner along the axial direction O of the powertrain.

Refer to FIG. 5 and FIG. 6. In an embodiment, the oil pump accommodating groove 140 further includes an accommodating groove oil inlet 143 (as shown in FIG. 6 and FIG. 9), the accommodating groove oil inlet 143 is configured to connect to the reducer receptacle 150, and along the axial direction O of the powertrain, a distance between either of the reducer oil outlet 147 and the motor oil outlet 146 and the groove opening 140a of the oil pump accommodating groove 140 is shorter than a distance between either of the reducer oil outlet 147 and the motor oil outlet 146 and the accommodating groove oil inlet 143.

In this embodiment of this application, the oil storage pool 148 (as shown in FIG. 9) is formed at the bottom of the reducer receptacle 150, and the accommodating groove oil inlet 143 is configured to input oil in the oil storage pool 148 into the oil pump accommodating groove 140. Then, the oil pump 500 pumps out the oil to the reducer oil outlet 147 and the motor oil outlet 146. The accommodating groove oil inlet 143 is configured to connect to the reducer receptacle 150. The oil in the oil storage pool 148 at the bottom of the reducer receptacle 150 flows through the accommodating groove oil inlet 143 and the oil pump accommodating groove 140 sequentially and is pumped into the reducer oil outlet 147 by the oil pump 500, and flows into the reducer receptacle 150 from the oil line 180 to lubricate the gear set of the reducer 200. Then, the oil falls back to the oil storage pool 148 at the bottom of the reducer receptacle 150. This forms an oil flowing circulation loop. The accommodating groove oil inlet 143 is also referred to as an oil return hole.

In this embodiment of this application, the reducer oil outlet 147 and the motor oil outlet 146 are arranged between the reducer accommodating groove 120 and the groove opening 140a of the oil pump accommodating groove 140 along the axial direction O of the powertrain, and along the axial direction O of the powertrain, the distance between either of the reducer oil outlet 147 and the motor oil outlet 146 and the groove opening 140a of the oil pump accommodating groove 140 is shorter than the distance between either of the reducer oil outlet 147 and the motor oil outlet 146 and the accommodating groove oil inlet 143. This helps shorten a path for the oil to enter the oil pump accommodating groove 140 from the accommodating groove oil inlet 143 and then flow to the reducer oil outlet 147 and the motor oil outlet 146, reduce a pipe layout, and reduce production costs.

Refer to FIG. 6 and FIG. 7. In an embodiment, along the axial direction O of the powertrain, the accommodating groove oil inlet 143, the coarse filter accommodating section 144 of the oil pump accommodating groove 140, and the oil pump accommodating section 145 of the oil pump accommodating groove 140 are sequentially arranged.

In this embodiment of this application, the accommodating groove oil inlet 143, the coarse filter accommodating section 144, and the oil pump accommodating section 145 are sequentially arranged, so that the accommodating groove oil inlet 143, the coarse filter 149, and the oil pump 500 are sequentially arranged, and the oil smoothly enters the oil pump 500 through the accommodating groove oil inlet 143 and the coarse filter 149 sequentially. In addition, this helps reduce arrangement space along the axial direction O of the powertrain, and facilitates miniaturization arrangement of the powertrain 10.

Still refer to FIG. 5. In an embodiment, the intermediate housing 100 further includes a first hole 101 and a reducer output shaft hole 230, the oil line 170 is die-casted in the intermediate housing 100, the first hole 101 is configured to connect to the oil line 170, the first hole 101 is configured to accommodate a sealing member, and the reducer output shaft hole 230 is configured to accommodate an output shaft 220 of the reducer 200. An opening of the first hole 101 is away from the oil pump accommodating groove 140 along a radial direction of the oil pump accommodating groove 140. A distance between the first hole 101 and the oil pump accommodating groove 140 is longer than an inner diameter of the oil pump accommodating groove 140. The first hole 101 is arranged between the reducer output shaft hole 230 and the motor receptacle 160 along an arrangement direction of the reducer output shaft hole 230 and the motor receptacle 160. The distance between the first hole 101 and the oil pump accommodating groove 140 is longer than a minimum distance between an inner wall of the reducer output shaft hole 230 and an inner wall of the motor receptacle 160.

In this embodiment of this application, the first hole 101 helps process the oil line 170 inwards from an outer side of the intermediate housing 100. In an embodiment, the first hole 101 and the oil line 170 are integrally die-casted, so that the oil line 170 and the first hole 101 do not need to be processed separately. This helps reduce working procedures and reduce manufacturing difficulty of the oil line 170. The sealing member is located in the first hole 101 to seal the first hole 101, so as to prevent the oil in the oil line 170 from leaking from the first hole 101.

In this embodiment of this application, the opening of the first hole 101 is away from the oil pump accommodating groove 140 along the radial direction of the oil pump accommodating groove 140. This facilitates drafting from the opening of the first hole 101 after the first hole 101 and the oil line 170 are die-casted, so that a drafting process is smoother. The oil line 170 is die-casted in the intermediate housing 100, to avoid additional pipe arrangement, save materials of the intermediate housing 100, and help reduce production costs.

In this embodiment of this application, the distance between the first hole 101 and the oil pump accommodating groove 140 is denoted as L1, and the inner diameter of the oil pump accommodating groove 140 is denoted as L2, where L1>L2. The distance between the first hole 101 and the oil pump accommodating groove 140 is long, in other words, a pipe of the oil line 170 is long. This helps maintain structural stability of the intermediate housing 100 when the first hole 101 and the oil line 170 are integrally die-casted with the intermediate housing 100. In addition, a far position of the first hole 101 further helps that the position of the first hole 101 does not affect arrangement of other components of the intermediate housing 100.

In this embodiment of this application, the first hole 101 is arranged between the reducer output shaft hole 230 and the motor receptacle 160 along the arrangement direction of the reducer output shaft hole 230 and the motor receptacle 160, so that space between the reducer output shaft hole 230 and the motor receptacle 160 is fully utilized, and arrangement of the oil line 170 in the intermediate housing 100 is more reasonable. In addition, this helps reduce impact on the reducer output shaft hole 230 and the motor receptacle 160 in a process of integrally die-casting and drafting the first hole 101 and the oil line 170.

In this embodiment of this application, the distance between the first hole 101 and the oil pump accommodating groove 140 is denoted as L1, and the minimum distance between the inner wall of the reducer output shaft hole 230 and the inner wall of the motor receptacle 160 is denoted as L3, where L1>L3. The distance between the first hole 101 and the oil pump accommodating groove 140 is long. This helps maintain structural stability of the intermediate housing 100 when the first hole 101 and the oil line 170 are integrally die-casted with the intermediate housing 100. In addition, the far position of the first hole 101 further helps that the position of the first hole 101 does not affect arrangement of other components of the intermediate housing 100.

Still refer to FIG. 5 and FIG. 9. FIG. 9 is a diagram of a structure of the intermediate housing 100 according to an embodiment of this application. In an embodiment, the intermediate housing 100 further includes a throttle hole 171, and the throttle hole 171 is configured to connect to the oil line 170 and the reducer receptacle 150. The throttle hole 171 is arranged between the reducer output shaft hole 230 and the motor receptacle 160 along the arrangement direction of the reducer output shaft hole 230 and the motor receptacle 160. The throttle hole 171 is arranged between the first hole 101 and the oil pump accommodating groove 140 along an arrangement direction of the first hole 101 and the oil pump accommodating groove 140. An opening of the throttle hole 171 faces the reducer receptacle 150 (as shown in FIG. 9).

In this embodiment of this application, after the oil is pumped into the oil line 170 from the oil pump 500, the oil flows into the reducer receptacle 150 through the throttle hole 171 to lubricate the gear set of the reducer 200, and the oil passes through the oil pump accommodating groove 140, the reducer oil outlet 147, the oil line 170, the throttle hole 171, and the reducer receptacle 150 sequentially. The opening of the throttle hole 171 faces the reducer receptacle 150. This helps the oil be input into the reducer receptacle 150 more smoothly to lubricate the gear set of the reducer 200. The opening that is of the throttle hole 171 and that faces the reducer receptacle 150 can spray the oil into an oil sump (not shown in the figure) to lubricate the gear set of the reducer 200.

In this embodiment of this application, the throttle hole 171 is arranged between the reducer output shaft hole 230 and the motor receptacle 160 along the arrangement direction of the reducer output shaft hole 230 and the motor receptacle 160, so that the throttle hole 171 is opened in the pipe through which the oil in the oil line 170 flows. The throttle hole 171 is arranged between the first hole 101 and the oil pump accommodating groove 140 along the arrangement direction of the first hole 101 and the oil pump accommodating groove 140, so that the oil flows out of the throttle hole 171 to the reducer receptacle 150 in time when the oil flows in the oil line 170. Therefore, an impact force exerted on the sealing member at the first hole 101 in oil conveying is reduced, and this helps prevent the oil from breaking through the sealing member and leaking from the first hole 101.

In an embodiment, an aperture of the throttle hole 171 is smaller than an aperture of the oil line 170, so that a small part of oil enters the reducer receptacle 150 to lubricate the gear set, and a large part of oil enters the motor receptacle 160 to cool components such as the stator and the rotor. In this embodiment of this application, the throttle hole 171 is used, so that an oil flow rate of the oil line 170 is less than an oil flow rate of the oil line 180.

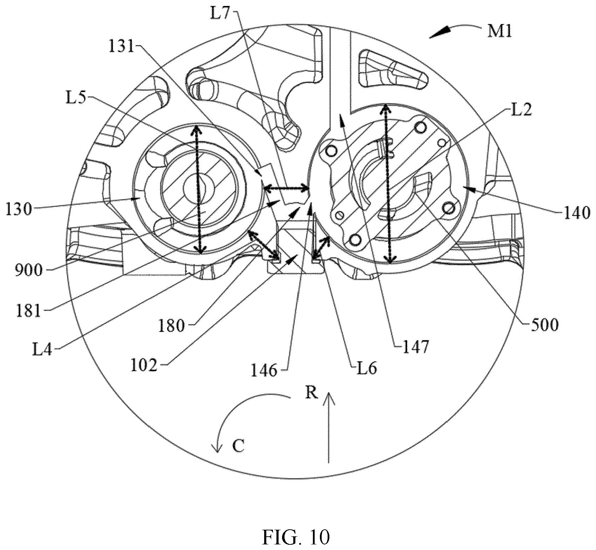

Refer to FIG. 5, FIG. 8, and FIG. 10. FIG. 10 is a partial enlarged diagram of a part M1 in FIG. 5. In an embodiment, the intermediate housing 100 further includes a fine filter accommodating groove 130 and a second hole 102, the fine filter accommodating groove 130 is configured to accommodate the fine filter 900, the oil line 180 includes a first connection section 181, the first connection section 181 is die-casted in the intermediate housing 100, the fine filter accommodating groove 130 is connected to the motor oil outlet 146 via the first connection section 181, the fine filter accommodating groove 130 is further configured to connect to the heat exchanger 400 (as shown in FIG. 2), and the second hole 102 is configured to connect to the fine filter accommodating groove 130 and the motor oil outlet 146. A groove opening 130a of the fine filter accommodating groove 130 faces away from the reducer accommodating groove 120 along the axial direction O of the powertrain. The reducer oil outlet 147, the motor oil outlet 146, and the second hole 102 are sequentially arranged at intervals along the circumferential direction C of the oil pump accommodating groove 140. A distance between the second hole 102 and the fine filter accommodating groove 130 is shorter than an inner diameter of the fine filter accommodating groove 130, and a distance between the second hole 102 and the oil pump accommodating groove 140 is shorter than an inner diameter of the oil pump accommodating groove 140.

In this embodiment of this application, the second hole 102 helps process the first connection section 181 of the oil line 180 inwards from the outer side of the intermediate housing 100, to connect the fine filter accommodating groove 130 to the motor oil outlet 146. The sealing member is located in the second hole 102 to seal the second hole 102, so as to prevent the oil in the oil line 180 from leaking from the second hole 102. The fine filter 900 filters and removes impurities from oil that flows into the fine filter 900 from the first connection section 181 of the oil line 180, to obtain oil with high cleanliness. The fine filter accommodating groove 130 is connected to the heat exchanger 400. The oil filtered by the fine filter 900 flows into the heat exchanger 400, and after being cooled through heat exchange with coolant flowing through the heat exchanger 400, the oil is conveyed to the motor receptacle 160 to cool and lubricate the motor 300.

In this embodiment of this application, the groove opening 130a of the fine filter accommodating groove 130 faces away from the reducer accommodating groove 120 along the axial direction O of the powertrain (as shown in FIG. 8). This helps mount the fine filter 900 in the fine filter accommodating groove 130 in a direction away from the reducer accommodating groove 120, and helps draft the fine filter accommodating groove 130 in the direction away from the reducer accommodating groove 120 along the axial direction O of the powertrain after the intermediate housing 100 is integrally die-casted. The first connection section 181 is die-casted in the intermediate housing 100, to help maintain structural stability of the intermediate housing 100, reduce pipe arrangement outside the intermediate housing 100, reduce an overall size of the powertrain 10, save die-casting materials, and reduce production costs.

In this embodiment of this application, the reducer oil outlet 147, the motor oil outlet 146, and the second hole 102 are sequentially arranged at intervals along the circumferential direction C of the oil pump accommodating groove 140. This helps reduce impact of the second hole 102 on a die-casting process of the reducer oil outlet 147, the motor oil outlet 146, the oil line 180, and the oil line 170 when the intermediate housing 100 is die-casted.

As shown in FIG. 10, in this embodiment of this application, the distance between the second hole 102 and the fine filter accommodating groove 130 is denoted as L4, the inner diameter of the fine filter accommodating groove 130 is denoted as L5, the distance between the second hole 102 and the oil pump accommodating groove 140 is denoted as L6, and the inner diameter of the oil pump accommodating groove 140 is L2, where L4<L5, and L6<L2, so that a structure between the second hole 102 and the fine filter accommodating groove 130 and a structure between the second hole 102 and the oil pump accommodating groove 140 are compact, and space for arranging the first connection section 181 of the oil line 180 is narrow. A design of the second hole 102 makes it possible to connect the fine filter accommodating groove 130 to the motor oil outlet 146 by performing processing inwards from the outer side of the intermediate housing 100.

Still refer to FIG. 5 and FIG. 10. In an embodiment, a distance between the fine filter accommodating groove 130 and the oil pump accommodating groove 140 is shorter than the inner diameter of the fine filter accommodating groove 130 and the inner diameter of the oil pump accommodating groove 140.

In this embodiment of this application, the distance between the fine filter accommodating groove 130 and the oil pump accommodating groove 140 is denoted as L7, the inner diameter of the fine filter accommodating groove 130 is L5, and the inner diameter of the oil pump accommodating groove 140 is L2, where L7<L5, and L7<L2. It indicates that a structure layout between the fine filter accommodating groove 130 and the oil pump accommodating groove 140 is compact, and space is narrow. The design of the second hole 102 makes it possible to connect the fine filter accommodating groove 130 to the motor oil outlet 146 by performing processing inwards from the outer side of the intermediate housing 100. In addition, L7 is small, and the fine filter 900 and the oil pump 500 are arranged compactly. This facilitates miniaturization arrangement of the powertrain 10.

Still refer to FIG. 5 and FIG. 10. In an embodiment, a groove wall of the fine filter accommodating groove 130 includes a fine filter oil inlet 131, and the fine filter oil inlet 131 is configured to connect to the second hole 102. A connection line between the fine filter oil inlet 131 and the second hole 102 intersects a connection line between the motor oil outlet 146 and the second hole 102. An aperture of the second hole 102 is larger than an aperture of the fine filter oil inlet 131 and an aperture of the motor oil outlet 146.

In this embodiment of this application, the fine filter oil inlet 131 is configured to receive oil from the first connection section 181 of the oil line 180 to enter the fine filter 900, and the fine filter oil inlet 131 is connected to the second hole 102, so that the fine filter oil inlet 131 is formed by processing inwards from the outer side of the intermediate housing 100 through the second hole 102. The connection line between the fine filter oil inlet 131 and the second hole 102 intersects the connection line between the motor oil outlet 146 and the second hole 102. This helps process both the fine filter 900 oil inlet and the motor oil outlet 146 from the second hole 102 to an inner side of the intermediate housing 100, so that the motor oil outlet 146 is connected to the second hole 102, the fine filter oil inlet 131 is connected to the second hole 102, and the fine filter oil inlet 131 is connected to the motor oil outlet 146. In this way, one second hole 102 can be processed to connect to an oil passage of the oil pump accommodating groove 140 and the fine filter accommodating groove 130.

In this embodiment of this application, the aperture of the second hole 102 is larger than the aperture of the fine filter oil inlet 131 and the aperture of the motor oil outlet 146. This helps process from the outer side of the intermediate housing 100 to the inner side of the intermediate housing 100 from the second hole 102 to obtain the fine filter oil inlet 131 and the motor oil outlet 146.

Refer to FIG. 3, FIG. 8, and FIG. 9. In an embodiment, the intermediate housing 100 includes a housing mounting surface 190 (as shown in FIG. 9), the housing mounting surface 190 is configured to mount the reducer end cover 700 (as shown in FIG. 3 and FIG. 8), the housing mounting surface 190 includes a housing oil outlet hole 103, the oil line 180 further includes a second connection section 182 (as shown in FIG. 8), the second connection section 182 is die-casted in the intermediate housing 100, and the housing oil outlet hole 103 is configured to connect to the fine filter accommodating groove 130 via the second connection section 182. An opening of the housing oil outlet hole 103 faces away from the groove opening 130a of the fine filter accommodating groove 130 or the groove opening 140a of the oil pump accommodating groove 140 along the axial direction O of the powertrain.

In this embodiment of this application, the housing mounting surface 190 is fastened to the reducer end cover 700, and the housing mounting surface 190 may be a flat surface or a concave-convex surface, provided that it is ensured that the housing mounting surface 190 can be fastened to the reducer end cover 700. For example, both the housing mounting surface 190 and a mounting surface of the reducer end cover 700 are flat surfaces. For example, the housing mounting surface 190 matches with the mounting surface of the reducer end cover 700 in a concave-convex manner.

In this embodiment of this application, the second connection section 182 of the oil line 180 includes a second radial connection section 182a and a second axial connection section 182b (as shown in FIG. 8). The second radial connection section 182a is connected to the fine filter oil inlet 131 of the fine filter accommodating groove 130, and the second axial connection section 182b is connected to the housing oil outlet hole 103. The oil flows out of the intermediate housing 100 from the oil pump accommodating groove 140, the motor oil outlet 146, the first connection section 181, the fine filter oil inlet 131, the fine filter accommodating groove 130, the second radial connection section 182a, the second axial connection section 182b, and the housing oil outlet hole 103 sequentially (as shown in FIG. 5 and FIG. 8). An outer surface of the second radial connection section 182a protrudes towards the groove opening 130a of the fine filter accommodating groove 130 along the axial direction O of the powertrain, an outer surface of the second axial connection section 182b protrudes away from the fine filter accommodating groove 130 along the radial direction R of the powertrain, and protrusion directions of the outer surfaces of the second radial connection section 182a and the second axial connection section 182b are perpendicular to each other.

In this embodiment of this application, the second connection section 182 is die-casted in the intermediate housing 100, to help maintain structural stability of the intermediate housing 100, reduce pipe arrangement outside the intermediate housing 100, reduce an overall size of the powertrain 10, save die-casting materials, and reduce production costs.

In an embodiment, the intermediate housing 100 includes a third hole 105 (as shown in FIG. 8), an opening of the third hole 105 faces away from the fine filter accommodating groove 130 along a radial direction of the fine filter accommodating groove 130, the third hole 105 is configured to connect to the second radial connection section 182a, the third hole 105 is coaxial with the second radial connection section 182a, and the third hole 105 is configured to accommodate the sealing member. In this embodiment of this application, the third hole 105 is used to process the second radial connection section 182a inwards from the outer side of the intermediate housing 100.

In this embodiment of this application, the opening of the housing oil outlet hole 103 faces away from the groove opening 130a of the fine filter accommodating groove 130 or the groove opening 140a of the oil pump accommodating groove 140 along the axial direction O of the powertrain, in other words, the opening of the housing oil outlet hole 103 faces the reducer end cover 700. This helps the oil in the intermediate housing 100 flow from the housing oil outlet hole 103 to an internal oil passage of the reducer end cover 700. The housing oil outlet hole 103 is further configured to process the second axial connection section 182b inwards from the outer side of the intermediate housing 100.

Refer to FIG. 8. In an embodiment, when an axial thickness of the intermediate housing 100 is thick, the second axial connection section 182b or the second radial connection section 182a may be formed inside the intermediate housing 100. In other words, an outer surface of the second axial connection section 182b or the second radial connection section 182a is flush with an overall surface of the intermediate housing 100. A convex shape of the second axial connection section 182b or the second radial connection section 182a cannot be clearly seen on the surface of the intermediate housing 100.

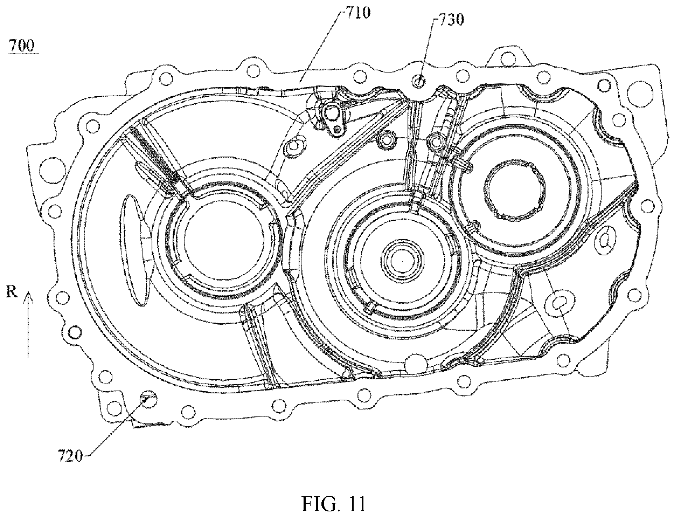

Refer to FIG. 2, FIG. 5, FIG. 8, FIG. 9, and FIG. 11. FIG. 11 is a diagram of a structure of the reducer end cover 700 according to an embodiment of this application. In an embodiment, the reducer end cover 700 includes an end cover mounting surface 710 (as shown in FIG. 11), the end cover mounting surface 710 is configured to fasten the housing mounting surface 190 (as shown in FIG. 9), the end cover mounting surface 710 includes an end cover oil inlet hole 720 (as shown in FIG. 11), the oil line 180 (as shown in FIG. 5) further includes a third connection section 183 (as shown in FIG. 2), the third connection section 183 is die-casted in the reducer end cover 700, and the end cover oil inlet hole 720 is configured to connect to the housing oil outlet hole 103 (as shown in FIG. 9) and connect to the heat exchanger 400 (as shown in FIG. 2) via the third connection section 183. An opening of the end cover oil inlet hole 720 faces the intermediate housing 100 along the axial direction O of the powertrain. A projection of the end cover oil inlet hole 720 at least partially overlaps with a projection of the housing oil outlet hole 103 along the axial direction O of the powertrain.

In this embodiment of this application, the end cover mounting surface 710 is fastened to the intermediate housing 100, and the end cover mounting surface 710 may be a flat surface or a concave-convex surface, provided that it is ensured that the end cover mounting surface 710 can be fastened to the housing mounting surface 190. For example, both the end cover mounting surface 710 and the housing mounting surface 190 are flat surfaces. For example, the end cover mounting surface 710 matches with the housing mounting surface 190 in a concave-convex manner.

In this embodiment of this application, the end cover oil inlet hole 720 is configured to: receive oil that flows out of the housing oil outlet hole 103 from the second connection section 182 (as shown in FIG. 8) of the oil line 180 of the intermediate housing 100, and convey the oil to the heat exchanger 400 via the third connection section 183. The oil exchanges heat with the coolant in the heat exchanger 400 to be cooled, and the oil sequentially passes through the oil pump accommodating groove 140, the motor oil outlet 146, the first connection section 181, the fine filter oil inlet 131, the fine filter accommodating groove 130, the second radial connection section 182a, the second axial connection section 182b, the housing oil outlet hole 103, the end cover oil inlet hole 720, and the third connection section 183 and flows into the heat exchanger 400 (as shown in FIG. 2).

In this embodiment of this application, the third connection section 183 includes a third radial connection section 183a and a third axial connection section 183b that are connected (as shown in FIG. 8), the third radial connection section 183a is configured to connect to the heat exchanger 400, the third axial connection section 183b is configured to connect to the end cover oil inlet hole 720, and the third axial connection section 183b protrudes, away from the intermediate housing 100, from a surface of the reducer end cover 700 along the axial direction O of the powertrain. The third axial connection section 183b is coaxial with the end cover oil inlet hole 720, and the end cover oil inlet hole 720 is further configured to form the third axial connection section 183b. In an embodiment, the reducer end cover 700 further includes a fourth hole 106, the fourth hole 106 is configured to connect to the third radial connection section 183a, an opening of the fourth hole 106 is away from the heat exchanger 400 along an axial direction of the third radial connection section 183a, the fourth hole 106 is configured to form the third radial connection section 183a, and the fourth hole 106 is configured to accommodate the sealing member, to prevent oil of the third connection section 183 from leaking.

In this embodiment of this application, the third connection section 183 is die-casted in the reducer end cover 700, and a length direction of the third radial connection section 183a is arranged along a direction perpendicular to the axial direction O of the powertrain (as shown in FIG. 3). This helps smoothly perform die-casting and drafting of the third connection section 183, and helps reduce pipe arrangement outside the reducer end cover 700, reduce an overall size of the powertrain 10, save die-casting materials, and reduce production costs.

As shown in FIG. 9 and FIG. 11, in this embodiment of this application, the opening of the end cover oil inlet hole 720 faces the intermediate housing 100 along the axial direction O of the powertrain, so that the end cover oil inlet hole 720 can more smoothly receive the oil conveyed from the intermediate housing 100. The projection of the end cover oil inlet hole 720 at least partially overlaps with the projection of the housing oil outlet hole 103 along the axial direction O of the powertrain, so that the end cover oil inlet hole 720 can more smoothly receive the oil from the housing oil outlet hole 103.

In an embodiment, the end cover oil inlet hole 720 and the housing oil outlet hole 103 are sealed by using a sealing ring, to prevent oil from leaking.

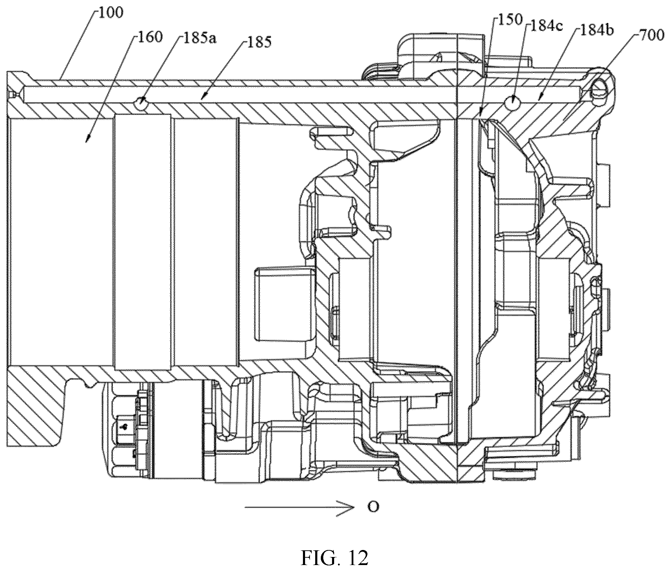

Refer to FIG. 2, FIG. 3, FIG. 5, FIG. 11, and FIG. 12. FIG. 12 is a sectional view of the powertrain 10 in FIG. 4 along B-B. In an embodiment, the reducer end cover 700 further includes a heat exchanger mounting surface 740, the heat exchanger mounting surface 740 is configured to mount the heat exchanger 400 (as shown in FIG. 2 and FIG. 3), the heat exchanger mounting surface 740 includes a heat exchange oil inlet hole 750 and a heat exchange oil outlet hole 760, the end cover oil inlet hole 720 is configured to connect to the heat exchange oil outlet hole 760 via the third connection section 183, the heat exchange oil outlet hole 760 is configured to connect to an oil inlet of the heat exchanger 400, the heat exchange oil inlet hole 750 is configured to connect to an oil outlet of the heat exchanger 400, the end cover mounting surface 710 further includes an end cover oil outlet hole 730 (as shown in FIG. 11), the oil line 180 (as shown in FIG. 5) further includes a fourth connection section 184 (as shown in FIG. 3), the fourth connection section 184 is die-casted in the reducer end cover 700, and the end cover oil outlet hole 730 is configured to connect to the heat exchange oil inlet hole 750 via the fourth connection section 184. An opening of the end cover oil outlet hole 730 faces a same direction as the opening of the end cover oil inlet hole 720 (as shown in FIG. 11). The heat exchanger mounting surface 740 and the end cover mounting surface 710 are away from each other along the axial direction O of the powertrain. Openings of the heat exchange oil inlet hole 750 and the heat exchange oil outlet hole 760 both face away from the opening of the end cover oil inlet hole 720.

In this embodiment of this application, along the axial direction O of the powertrain, the heat exchanger 400, the reducer end cover 700, the intermediate housing 100, and the motor end cover 800 (as shown in FIG. 2) are sequentially arranged. The fourth connection section 184 includes a fourth radial connection section 184a along the radial direction R of the powertrain and a fourth axial connection section 184b along the axial direction O of the powertrain. The heat exchanger 400 is configured to cool the oil in the oil line 180 (as shown in FIG. 5). The oil of the third connection section 183 flows out of the heat exchange oil outlet hole 760 of the heat exchanger mounting surface 740 from the internal oil passage of the reducer end cover 700, flows into the oil inlet of the heat exchanger 400, enters an oil passage of the heat exchanger 400, flows out of the oil outlet of the heat exchanger 400 to the heat exchange oil inlet hole 750 after being cooled through heat exchange between the oil passage and a liquid passage inside the heat exchanger 400, then flows into the fourth radial connection section 184a and the fourth axial connection section 184b from the heat exchange oil inlet hole 750 of the heat exchanger mounting surface 740, and finally flows out of the internal oil passage of the reducer end cover 700 from the end cover oil outlet hole 730.

In this embodiment of this application, the fourth axial connection section 184b has an oil outlet hole 184c that may be configured to output two lines of oil to separately lubricate bearings of the motor receptacle 160 and the reducer end cover 700 (as shown in FIG. 12). The fourth connection section 184 is die-casted in the reducer end cover 700. This helps reduce pipe arrangement outside the reducer end cover 700, reduce an overall size of the powertrain 10, implement miniaturization of the powertrain 10, save die-casting materials, and reduce production costs. In an embodiment, the reducer end cover 700 further includes a fifth hole 107 (as shown in FIG. 3), the fifth hole 107 is coaxial with the oil outlet hole 184c and the fourth radial connection section 184a, and the fifth hole 107 is configured to form the oil outlet hole 184c and the fourth radial connection section 184a inside the reducer end cover 700.

In this embodiment of this application, the opening of the end cover oil outlet hole 730 faces the same direction as the opening of the end cover oil inlet hole 720, and the opening of the end cover oil outlet hole 730 and the opening of the end cover oil inlet hole 720 both face the intermediate housing 100 along the axial direction O of the powertrain. The opening of the end cover oil inlet hole 720 faces the intermediate housing 100. This helps more smoothly receive oil output from the housing oil outlet hole 103 (as shown in FIG. 9) of the intermediate housing 100. The opening of the end cover oil outlet hole 730 faces the intermediate housing 100. This helps more smoothly input oil output from the end cover oil outlet hole 730 into an internal oil passage of the intermediate housing 100.

In this embodiment of this application, the heat exchanger mounting surface 740 and the end cover mounting surface 710 are away from each other along the axial direction O of the powertrain. This facilitates mounting of the heat exchanger 400 on the reducer end cover 700 housing in a direction away from the intermediate housing 100 along the axial direction O of the powertrain, and facilitates connection between the fourth connection section 184 and the heat exchanger 400. The heat exchange oil inlet hole 750 and the heat exchange oil outlet hole 760 are respectively connected to the oil inlet and the oil outlet of the heat exchanger 400, and the openings of the heat exchange oil inlet hole 750 and the heat exchange oil outlet hole 760 both face away from the opening of the end cover oil inlet hole 720. This facilitates mounting and fastening of the heat exchanger 400 on the reducer end cover 700, and facilitates a smoother path of oil flowing into the heat exchanger 400 from the end cover oil inlet hole 720.

Still refer to FIG. 4. In an embodiment, when an axial thickness of the reducer end cover 700 is thick, the fourth axial connection section 184b may be formed inside the reducer end cover 700, in other words, an outer surface of the fourth axial connection section 184b is flush with the surface of the reducer end cover 700.

Refer to FIG. 4, FIG. 9, FIG. 11, and FIG. 12. In an embodiment, the housing mounting surface 190 further includes a housing oil inlet hole 104 (as shown in FIG. 9), the oil line 180 (as shown in FIG. 5) further includes a fifth connection section 185 (as shown in FIG. 4), the fifth connection section 185 is die-casted in the intermediate housing 100, and the housing oil inlet hole 104 is configured to connect to the end cover oil outlet hole 730 (as shown in FIG. 11) and connect to the motor receptacle 160 via the fifth connection section 185 (as shown in FIG. 12). An opening of the housing oil inlet hole 104 faces a same direction as the opening of the housing oil outlet hole 103. A projection of the housing oil inlet hole 104 at least partially overlaps with a projection of the end cover oil outlet hole 730 along the axial direction O of the powertrain.

As shown in FIG. 4, in this embodiment of this application, the fifth connection section 185 is arranged along the axial direction O of the powertrain. This helps smoothly perform die-casting and drafting of the fifth connection section 185. The fifth connection section 185 is die-casted in the intermediate housing 100, to help maintain structural stability of the intermediate housing 100, reduce pipe arrangement outside the intermediate housing 100, reduce an overall size of the powertrain 10, save die-casting materials, and reduce production costs.

In this embodiment of this application, the housing oil inlet hole 104 is configured to receive oil that is of the fourth axial connection section 184b and that is output from the end cover oil outlet hole 730, and the oil sequentially passes through the fourth axial connection section 184b, the end cover oil outlet hole 730, the housing oil inlet hole 104, and the fifth connection section 185 and flows into the motor receptacle 160 from an oil outlet hole 185a of the fifth connection section (as shown in FIG. 12), to cool and lubricate the motor 300.

In this embodiment of this application, the opening of the housing oil inlet hole 104 faces the same direction as the opening of the housing oil outlet hole 103 (as shown in FIG. 9), and the opening of the housing oil inlet hole 104 and the opening of the housing oil outlet hole 103 both face the reducer end cover 700 along the axial direction O of the powertrain. The opening of the housing oil inlet hole 104 faces the reducer end cover 700. This helps receive oil output from the end cover oil outlet hole 730 of the reducer end cover 700. The housing oil outlet hole 103 faces the reducer end cover 700. This helps the housing oil outlet hole 103 output oil to the end cover oil inlet hole 720 of the reducer end cover 700. The projection of the housing oil inlet hole 104 at least partially overlaps with the projection of the end cover oil outlet hole 730 along the axial direction O of the powertrain. This helps oil more smoothly flow into the end cover oil outlet hole 730 from the housing oil inlet hole 104, and then flow into the motor receptacle 160 through the fifth connection section 185 to cool and lubricate the motor 300.

The powertrain with dual-line oil cooling and lubrication and the electric vehicle provided in embodiments of this application are described above in detail. The principle and embodiments of this application are described herein through specific examples. The descriptions about embodiments are merely provided to help understand the method and core ideas of this application. In addition, a person of ordinary skill in the art can make modifications in terms of the specific embodiments and application scopes according to the ideas of this application. Therefore, the content of this specification shall not be construed as a limitation to this application.

## Claims

1. A powertrain with dual-line oil cooling and lubrication, wherein the powertrain comprises a housing, an oil pump, a motor, a reducer, and two oil lines, the housing comprises a motor receptacle and a reducer receptacle, the motor receptacle is configured to accommodate a stator and a rotor of the motor, the reducer receptacle is configured to accommodate a gear set of the reducer, and the two oil lines are configured to convey oil to the motor receptacle and the reducer receptacle respectively;
one oil line is configured to connect to at least one of an outlet of the oil pump, a fine filter, and a heat exchanger, and the motor receptacle, the fine filter is configured to filter impurities of oil flowing through the one oil line, and the heat exchanger is configured to cool the oil flowing through the one oil line; and
the other oil line is configured to directly connect to another outlet of the oil pump and the reducer receptacle.

2. The powertrain according to claim 1, wherein the oil conveyed by the one oil line flows through the fine filter and the heat exchanger sequentially and then enters the motor receptacle.

3. The powertrain according to claim 1, wherein the powertrain comprises one oil pump, and the one oil pump is configured to:
drive the oil in the one oil line to pass through at least one of the fine filter and the heat exchanger from an outlet of the one oil pump and then enter the motor receptacle, wherein the fine filter is configured to filter the impurities of the oil, and the heat exchanger is configured to cool the oil; and
drive oil in the other oil line to directly enter the reducer receptacle from another outlet of the one oil pump without passing through at least one of the fine filter and the heat exchanger.

4. The powertrain according to claim 1, wherein the housing comprises an intermediate housing, a motor end cover, and a reducer end cover, the intermediate housing comprises a motor accommodating groove, a reducer accommodating groove, and an oil pump accommodating groove, groove openings of the motor accommodating groove and the reducer accommodating groove are away from each other along an axial direction of the powertrain, the motor accommodating groove and the motor end cover form the motor receptacle through enclosing, the reducer accommodating groove and the reducer end cover form the reducer receptacle through enclosing, and the oil pump accommodating groove is configured to accommodate the oil pump;
the oil pump accommodating groove and the motor accommodating groove are arranged along a radial direction of the powertrain; and
the oil pump accommodating groove comprises a groove opening, and the groove opening of the oil pump accommodating groove is away from the reducer accommodating groove along the axial direction of the powertrain.

5. The powertrain according to claim 4, wherein a groove wall of the oil pump accommodating groove comprises a reducer oil outlet and a motor oil outlet, the motor oil outlet is configured to connect to an oil inlet of the one oil line, and the reducer oil outlet is configured to connect to an oil inlet of the other oil line; and
the reducer oil outlet and the motor oil outlet are arranged between the reducer accommodating groove and the groove opening of the oil pump accommodating groove along the axial direction of the powertrain, and the reducer oil outlet and the motor oil outlet are distributed at an interval along a circumferential direction of the oil pump accommodating groove.

6. The powertrain according to claim 5, wherein the oil pump accommodating groove further comprises an accommodating groove oil inlet, the accommodating groove oil inlet is configured to connect to the reducer receptacle, and along the axial direction of the powertrain, a distance between either of the reducer oil outlet and the motor oil outlet and the groove opening of the oil pump accommodating groove is shorter than a distance between either of the reducer oil outlet and the motor oil outlet and the accommodating groove oil inlet.

7. The powertrain according to claim 4, wherein the intermediate housing further comprises a first hole and a reducer output shaft hole, the other oil line is die-casted in the intermediate housing, the first hole is configured to connect to the other oil line, the first hole is configured to accommodate a sealing member, and the reducer output shaft hole is configured to accommodate an output shaft of the reducer;
an opening of the first hole is away from the oil pump accommodating groove along a radial direction of the oil pump accommodating groove, and a distance between the first hole and the oil pump accommodating groove is longer than an inner diameter of the oil pump accommodating groove; and
the first hole is arranged between the reducer output shaft hole and the motor receptacle along an arrangement direction of the reducer output shaft hole and the motor receptacle, and the distance between the first hole and the oil pump accommodating groove is longer than a minimum distance between an inner wall of the reducer output shaft hole and an inner wall of the motor receptacle.

8. The powertrain according to claim 7, wherein the intermediate housing further comprises a throttle hole, and the throttle hole is configured to connect to the other oil line and the reducer receptacle;
the throttle hole is arranged between the reducer output shaft hole and the motor receptacle along the arrangement direction of the reducer output shaft hole and the motor receptacle;
the throttle hole is arranged between the first hole and the oil pump accommodating groove along an arrangement direction of the first hole and the oil pump accommodating groove; and
an opening of the throttle hole faces the reducer receptacle.

9. The powertrain according to claim 4, wherein the intermediate housing further comprises a fine filter accommodating groove and a second hole, the fine filter accommodating groove is configured to accommodate the fine filter, the one oil line comprises a first connection section, the first connection section is die-casted in the intermediate housing, the fine filter accommodating groove is connected to the motor oil outlet via the first connection section, the fine filter accommodating groove is further configured to connect to the heat exchanger, and the second hole is configured to connect to the fine filter accommodating groove and the motor oil outlet;
a groove opening of the fine filter accommodating groove faces away from the reducer accommodating groove along the axial direction of the powertrain;
the reducer oil outlet, the motor oil outlet, and the second hole are sequentially arranged at intervals along a circumferential direction of the oil pump accommodating groove; and
a distance between the second hole and the fine filter accommodating groove is shorter than an inner diameter of the fine filter accommodating groove, and a distance between the second hole and the oil pump accommodating groove is shorter than an inner diameter of the oil pump accommodating groove.

10. The powertrain according to claim 9, wherein a groove wall of the fine filter accommodating groove comprises a fine filter oil inlet, and the fine filter oil inlet is configured to connect to the second hole;
a connection line between the fine filter oil inlet and the second hole intersects a connection line between the motor oil outlet and the second hole; and
an aperture of the second hole is larger than an aperture of the fine filter oil inlet and an aperture of the motor oil outlet.

11. The powertrain according to claim 9, wherein the intermediate housing comprises a housing mounting surface, the housing mounting surface is configured to mount the reducer end cover, the housing mounting surface comprises a housing oil outlet hole, the one oil line further comprises a second connection section, the second connection section is die-casted in the intermediate housing, and the housing oil outlet hole is configured to connect to the fine filter accommodating groove via the second connection section; and
an opening of the housing oil outlet hole faces away from the groove opening of the fine filter accommodating groove or the groove opening of the oil pump accommodating groove along the axial direction of the powertrain.

12. The powertrain according to claim 11, wherein the reducer end cover comprises an end cover mounting surface, the end cover mounting surface is configured to fasten the housing mounting surface, the end cover mounting surface comprises an end cover oil inlet hole, the one oil line further comprises a third connection section, the third connection section is die-casted in the reducer end cover, and the end cover oil inlet hole is configured to connect to the housing oil outlet hole and connect to the heat exchanger via the third connection section;
an opening of the end cover oil inlet hole faces the intermediate housing along the axial direction of the powertrain; and
a projection of the end cover oil inlet hole at least partially overlaps with a projection of the housing oil outlet hole along the axial direction of the powertrain.

13. The powertrain according to claim 12, wherein the reducer end cover further comprises a heat exchanger mounting surface, the heat exchanger mounting surface is configured to mount the heat exchanger, the heat exchanger mounting surface comprises a heat exchange oil inlet hole and a heat exchange oil outlet hole, the end cover oil inlet hole is configured to connect to the heat exchange oil outlet hole via the third connection section, the heat exchange oil outlet hole is configured to connect to an oil inlet of the heat exchanger, the heat exchange oil inlet hole is configured to connect to an oil outlet of the heat exchanger, the end cover mounting surface further comprises an end cover oil outlet hole, the one oil line further comprises a fourth connection section, the fourth connection section is die-casted in the reducer end cover, and the end cover oil outlet hole is configured to connect to the heat exchange oil inlet hole via the fourth connection section;
an opening of the end cover oil outlet hole faces a same direction as the opening of the end cover oil inlet hole;
the heat exchanger mounting surface and the end cover mounting surface are away from each other along the axial direction of the powertrain; and
openings of the heat exchange oil inlet hole and the heat exchange oil outlet hole both face away from the opening of the end cover oil inlet hole.

14. The powertrain according to claim 11, wherein the housing mounting surface further comprises a housing oil inlet hole, the one oil line further comprises a fifth connection section, the fifth connection section is die-casted in the intermediate housing, and the housing oil inlet hole is configured to connect to the end cover oil outlet hole and connect to the motor receptacle via the fifth connection section;
an opening of the housing oil inlet hole faces a same direction as the opening of the housing oil outlet hole; and
a projection of the housing oil inlet hole at least partially overlaps with a projection of the end cover oil outlet hole along the axial direction of the powertrain.

15. An electric vehicle, wherein the electric vehicle comprises a vehicle body, a cooling system, and the powertrain according to any one of claims 1 to 14, the vehicle body is configured to fasten the powertrain and the cooling system, the cooling system is configured to perform heat exchange with a heat exchanger in the powertrain, and the powertrain is configured to provide power for wheels of the electric vehicle.
